# EUROPÄISCHE PATENTSCHRIFT

(11) **EP 4 294 624 B1**
(45) Veröffentlichungstag und Bekanntmachung des Hinweises auf die Patenterteilung: **02.04.2025**
(21) Anmeldenummer: 22707142.0
(22) Anmeldetag: 22.02.2022
(51) Int. Cl.: B29C 70/44, B29C 43/12

(54) **VERFAHREN ZUR HERSTELLUNG VON FORMTEILEN**
METHOD FOR PRODUCING MOLDED PARTS
PROCÉDÉ DE FABRICATION DE PIÈCES MOULÉES

(30) Priorität: 22.02.2021 DE 102021000921
(43) Veröffentlichungstag der Anmeldung: 27.12.2023
(73) Patentinhaber: Siempelkamp Maschinen- und Anlagenbau GmbH, 47803 Krefeld (DE)
(72) Erfinder: KÖFFERS, Fabian, 47807 Krefeld (DE); SCHÖLER, Michael, 47509 Rheurdt (DE)
(74) Vertreter: Cohausz & Florack
(86) Internationale Anmeldenummer: PCT/EP2022/054377
(87) Internationale Veröffentlichungsnummer: WO 2022/175550

(56) Entgegenhaltungen:
- EP-A1- 3 237 358
- WO-A1-02/102565
- WO-A1-2015/082801
- US-A- 5 378 134

## Beschreibung

Die Erfindung betrifft ein Verfahren zur Herstellung von Formteilen, insbesondere aus Faserverbund-Werkstoff, umfassend die folgenden Schritte: a) Bereitstellen einer Vorrichtung umfassend: ein erstes Presswerkzeug, ein zweites Presswerkzeug, wenigstens eine Membran, und wenigstens eine Dichtung, wobei das erste Presswerkzeug und das zweite Presswerkzeug zwischen einer offenen Stellung und einer geschlossenen Stellung relativ zueinander bewegbar sind, wobei sich zwischen dem ersten Presswerkzeug und dem zweiten Presswerkzeug ein Arbeitsraum für ein Werkstück ausbildet, wobei die Membran wenigstens abschnittsweise zwischen dem ersten Presswerkzeug und dem zweite Presswerkzeug angeordnet ist, wobei die Membran wenigstens abschnittsweise in dem Arbeitsraum angeordnet ist, wobei sich zwischen der Membran und dem ersten Presswerkzeug und/oder dem zweiten Presswerkzeug wenigstens in der geschlossenen Stellung wenigstens eine Kavität für ein Arbeitsmedium ausbildet, wobei die Kavität durch die Dichtung wenigstens in der geschlossenen Stellung wenigstens abschnittsweise abdichtbar ist, wobei zur Abdichtung der Kavität eine Dichtungskraft mittels der Dichtung auf die Membran aufbringbar ist, und wobei die Membran und das erste Presswerkzeug und/oder das zweite Presswerkzeug unterschiedliche Wärmeausdehnungskoeffizienten aufweisen, b) Aufbringen einer Dichtungskraft mittels der Dichtung auf die Membran, wobei durch das Aufbringen der Dichtungskraft auf die Membran die Kavität wenigstens abschnittsweise abgedichtet wird, und wobei durch die Dichtungskraft eine Reibungskraft zwischen der Membran und der Dichtung anliegt, c) Beaufschlagen der Membran mit Druck und/oder Temperatur, vorzugsweise mittels eines Arbeitsmediums in der Kavität, wobei sich die Membran wenigstens in dem Arbeitsraum wenigstens abschnittsweise ausdehnt, vorzugsweise stärker ausdehnt als das erste Presswerkzeug und/oder das zweite Presswerkzeug, wobei die Membran mit Druck beaufschlagt wird, vorzugsweise mittels des Arbeitsmediums in der Kavität, wobei der Druck einer Ausdehnung der Membran in die Kavität entgegenwirkt und dadurch eine Ausdehnungskraft entlang der Membranfläche bewirkt, und wobei die Ausdehnungskraft wenigstens angrenzend zu der Dichtung der Reibungskraft zwischen der Membran und der Dichtung entgegenwirkt.

Bei Faserverbundwerkstoffen handelt es sich um Verbundwerkstoffe, die im Wesentlichen aus zwei Hauptkomponenten bestehen: aus verstärkenden Fasern sowie aus einem Kunststoff, in den die Fasern eingebettet sind ("Matrix" bzw. "Harz"). Durch die Kombination der beiden Hauptkomponenten kann erreicht werden, dass der Verbundwerkstoff insgesamt bessere Eigenschaften aufweist, als die beiden Komponenten allein betrachtet. Beispielsweise tragen die Fasern aufgrund ihrer hohen Zugfestigkeit in Faserrichtung dazu bei, die Zugfestigkeit des Verbundmaterials zu erhöhen. Die Matrix sorgt hingegen beispielsweise dafür, dass die Fasern in ihrer Position gehalten werden und vor mechanischen und chemischen Einflüssen geschützt werden.

Eine von mehreren Möglichkeiten der Herstellung von Bauteilen aus Faserverbundwerkstoffen basiert auf der Verwendung von vorgefertigten Faser-Harz-Halbzeugen (sog. "Prepregs", Kurzform von "preimpregnated fibers"). Bei derartigen Halbzeugen sind die Fasern mit einem noch nicht fertig reagierten Harzsystem versehen, so dass die Halbzeuge noch in flexibler Form vorliegen (z.B. bahnförmig, auf Rollen). Erst bei der Herstellung der Bauteile werden die Prepregs umgeformt und bei hohem Druck und hohen Temperaturen durch die Vollendung der chemischen Reaktion ausgehärtet. Dieser Schritt kann beispielsweise in einer Presse erfolgen.

Prepregs werden beispielsweise in der Luftfahrtindustrie in großen Mengen verarbeitet. Eine Herausforderung bei der Verarbeitung liegt darin, dass in der Luftfahrtindustrie häufig sehr komplexe Bauteilgeometrien erforderlich sind, beispielsweise aufgrund von Verstärkungselementen wie Stringern. Zudem soll der Montageaufwand verringert werden, was durch die Verwendung weniger, aber dafür größerer Bauteile erreicht werden soll. Die Kombination aus komplexen Geometrien und großen Bauteildimensionen stellt erhöhte Anforderungen an Vorrichtungen und Verfahren zur Herstellung dieser Bauteile. Eine Anforderung besteht beispielsweise darin, die in den Vorrichtungen verwendeten Membranen optimal an die Werkstückgeometrie anzupassen, um das Werkstück gleichmäßige mit Druck und/oder Temperatur beaufschlagen zu können, ohne jedoch die Membran zu hoch zu belasten.

Eine Vorrichtung und ein Verfahren zum Herstellen von Bauteilen aus Faserverbundwerkstoff sind beispielsweise aus der DE 10 2017 113 595 A1 bekannt. Das herzustellende Bauteil wird dabei zwischen zwei Schalen eingebracht. Dabei soll das herzustellende Bauteil gleichmäßige mit Druck beaufschlagt werden, wobei eine flexible Membran auf das Bauteil einwirkt, sodass von der dem Bauteil abgewandten Seite der Membran ein Öldruck auf die Membran einwirkt. Die Membran wird also von einem Öldruck auf die Bauteiloberfläche gepresst. Auf diese Weise soll auch bei gekrümmten Bauteiloberflächen sichergestellt sein, dass der Öldruck allseitig wirkt und somit die von der Membran auf die Bauteiloberfläche wirkende Kraft an jeder Stelle gleich groß ist, insbesondere auch die orthogonal auf die Bauteiloberfläche einwirkende Kraftkomponente.
- Die Verwendung einer derartigen "Membranpresse" zur Herstellung von Bauteilen aus Faserverbundwerkstoff ist auch aus der US 2016/0297153 A1 bekannt.

Bei diesen bekannten Pressen ist nur auf einer Seite des Bauteils eine flexible Membran vorgesehen, auf der anderen Seite des Bauteils ist hingegen ein starres Werkzeug vorgesehen. Wenngleich dies den Aufbau derartiger Pressen vereinfacht, haben derartige Pressen den Nachteil, dass nur auf der Seite der flexiblen Membran eine Anpassung der Geometrie an das Werkstück möglich ist, insbesondere des sich während des Pressvorgangs verformenden Werkstücks.

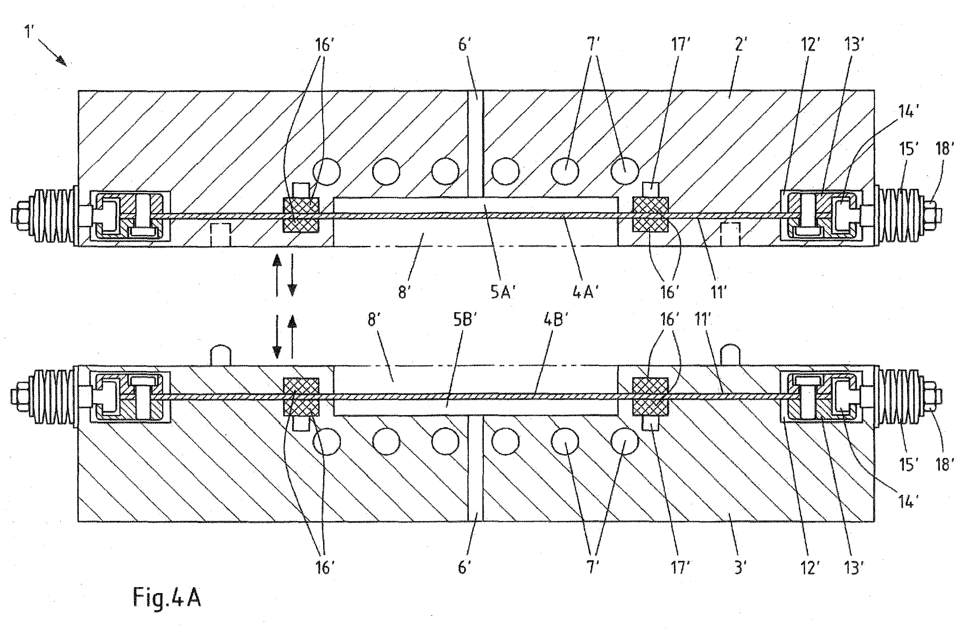

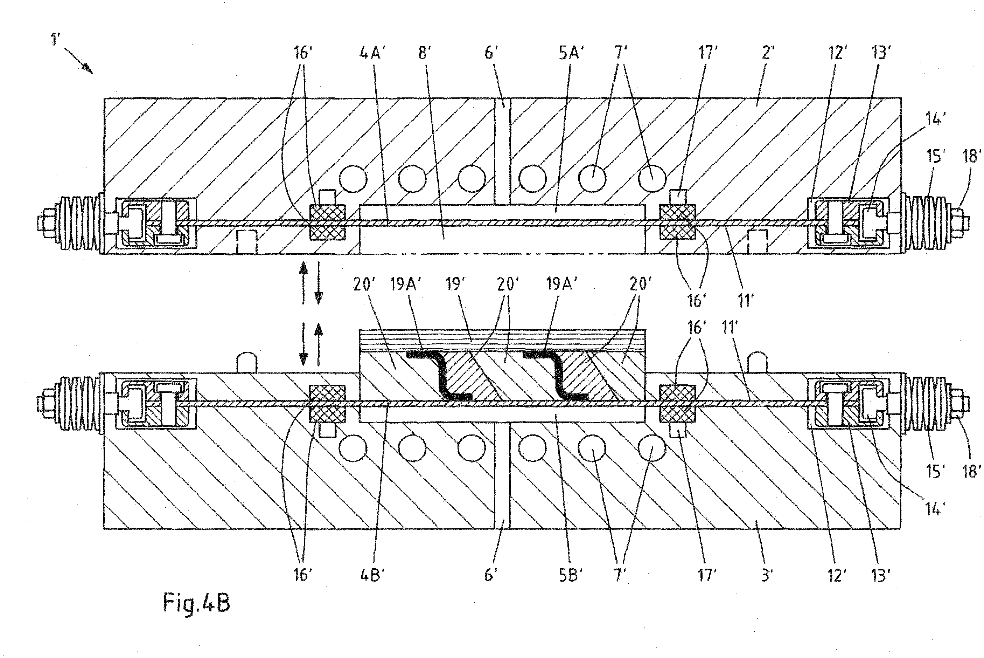

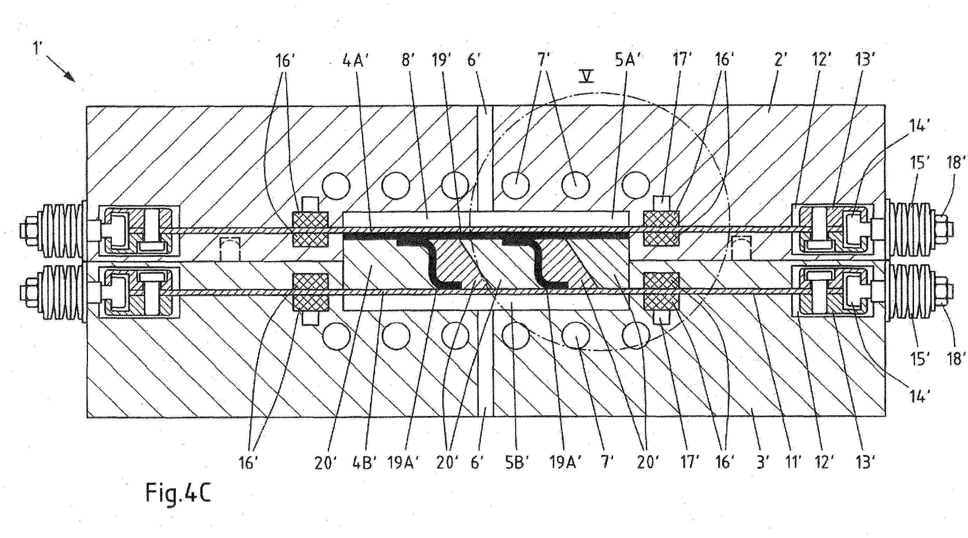

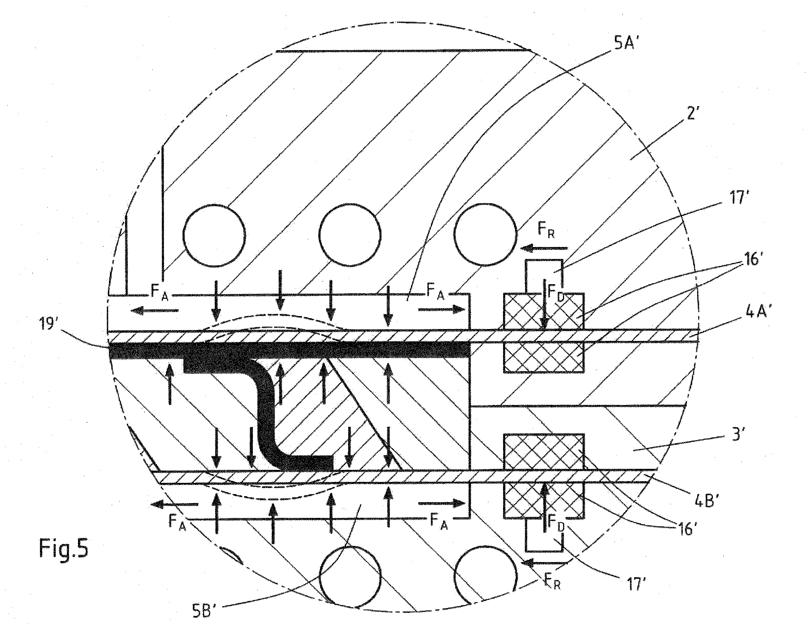

Es sind daher auch Pressen bekannt, bei denen zwei Membranen auf gegenüberliegenden Seiten des Werkstücks angeordnet sind. Eine derartige Presse ist beispielsweise aus der WO 2018/167730 A1 bekannt. Die dort gezeigte Presse weist zwei Presselemente auf, an denen jeweils eine Membran befestigt ist (vgl. Fig. 4, Fig. 5). Beide Membranen sind starr mit einem der Presselemente verbunden. Eine derartige - unbewegliche - Befestigung der Membrane erleichtert zwar die Abdichtung der durch die Membranen begrenzten Kavitäten und ist konstruktiv einfach umzusetzen, hat jedoch den Nachteil, dass die Membran nicht optimal an die Werkstückoberfläche angepasst werden kann. Zudem können thermisch bedingte Ausdehnungen der Membran aufgrund ihrer starren Einspannung nicht ausgeglichen werden. Dies kann zu einer ungleichen Druckverteilung und schlechteren Bauteilqualitäten führen sowie die Membranen hohen Belastungen, insbesondere hohen Spannungen, aussetzen.

Aus dem Stand der Technik ist zudem die US 5 378 134 A bekannt, diese offenbart eine Presse zum Formen eines Gegenstandes aus Verbundmaterial umfassend verstärkenden Fasern in einer Polymermatrix.

Der Erfindung liegt daher die Aufgabe zugrunde, das eingangs genannte und zuvor näher beschriebene Verfahren derart auszugestalten und weiterzubilden, dass die Belastung der Membran reduziert wird.

Diese Aufgabe wird bei einem Verfahren nach dem Oberbegriff von Patentanspruch 1 dadurch gelöst, dass die Membran an der Dichtung vorbeiführbar ist und dass in Schritt c) die Membran aufgrund der Ausdehnungskraft an der Dichtung vorbeigeführt wird.

Bei dem erfindungsgemäßen Verfahren handelt es sich um ein Verfahren zum Herstellen von Formteilen.

Das Verfahren umfasst zunächst den Schritt a), umfassend das Bereitstellens einer Vorrichtung, insbesondere einer Presse. Eine derartige Presse wird auch "Membranpresse" genannten. Die Vorrichtung umfasst ein erstes - beispielsweise oberes - Presswerkzeug, ein zweites - beispielsweise unteres - Presswerkzeug und wenigstens eine Membran.

Das erste Presswerkzeug und/oder das zweite Presswerkzeug sind vorzugsweise aus Metall, weiter vorzugsweise aus Stahl, insbesondere aus Invar, hergestellt. Durch die Verwendung von Metall, insbesondere Stahl kann eine hohe Standzeit der Presswerkzeuge erreicht werden. Invar weist zudem einen sehr niedrigen Wärmeausdehnungskoeffizienten auf. Die Verwendung von Invar ermöglicht daher eine sehr präzise Bearbeitung bzw. Herstellung von Werkstücken, insbesondere Formteilen, selbst bei sich während des Pressvorgangs verändernden Temperaturen.

Die Membran kann beispielsweise durch ein dünnes Metallblech, vorzugsweise ein dünnes Stahlblech, gebildet sein. Eine Membran aus Metallblech, insbesondere aus Stahlblech, hat den Vorteil, dass die Membran aufgrund der mechanischen Eigenschaften von Metall einerseits hohe Drücke übertragen kann und andererseits aufgrund der hohen thermischen Leitfähigkeit von Metall gut dazu geeignet ist, ein Werkstück zu heizen oder zu kühlen. Die Membran ist daher vorteilhafterweise für die Aufbringung von Druck und/oder Temperatur auf ein Werkstück vorgesehen. Die Membran ist vorzugsweise einteilig ausgebildet, kann jedoch alternativ auch mehrteilig ausgebildet sein. Die Vorrichtung kann zudem zwei oder wenigstens zwei Membranen umfassen. Durch die Verwendung von zwei oder wenigstens zwei Membranen kann auf einfache Weise von verschiedenen Seiten Druck und/oder Temperatur auf ein Werkstück, insbesondere auf ein Formteil, übertragen werden.

Die Vorrichtung umfasst zudem wenigstens eine Dichtung. Bei der Dichtung kann es sich beispielsweise um eine Graphitdichtung handeln, die vorzugsweise ein Drahtgeflecht aufweist. Die Dichtung kann dabei an dem ersten Presswerkzeug und/oder an dem zweiten Presswerkzeug vorgesehen sein. Außerdem kann die Dichtung sich wenigstens abschnittsweise im Wesentlichen parallel zu der Membran, insbesondere der Membranfläche, erstrecken. Vorzugsweise ist die Dichtung zweiteilig oder wenigstens zweiteilig ausgestaltet.

Das erste Presswerkzeug und das zweite Presswerkzeug sind relativ zueinander zwischen einer offenen Stellung und einer geschlossenen Stellung bewegbar. Hierdurch kann die Presse geöffnet und geschlossen werden. Die Relativbewegung zwischen dem erstem Presswerkzeug und zweitem Presswerkzeug kann, vorzugsweise zwischen der offenen Stellung und der geschlossenen Stellung, eine im Wesentlichen lineare Bewegung sein, insbesondere eine Auf- und Ab-Bewegung. Eine lineare Bewegung, insbesondere eine Auf- und Ab-Bewegung, ermöglicht eine konstruktiv einfache und schnelle Verstellbarkeit der Presswerkzeuge zwischen der offenen Stellung und der geschlossenen Stellung. In der geschlossenen Stellung sind das erste Presswerkzeug und das zweite Presswerkzeug zueinander zugefahren und vorzugsweise wenigstens abschnittsweise in Kontakt miteinander. In der offenen Stellung sind das erste Presswerkzeug und das zweite Presswerkzeug auseinandergefahren, sodass ein Werkstück zwischen die beiden Presswerkzeuge eingebracht werden kann. Neben der offenen Stellung und der geschlossenen Stellung sind das erste Presswerkzeug und das zweite Presswerkzeug relativ zueinander noch vorzugsweise in wenigstens eine Zwischenstellung bewegbar. Die wenigstens eine Zwischenstellung ist dabei insbesondere zwischen der offenen Stellung und der geschlossenen Stellungen angeordnet.

Zwischen dem ersten Presswerkzeug und dem zweiten Presswerkzeug bildet sich ein Arbeitsraum für ein Werkstück aus. Dieser Arbeitsraum bildet sich vorteilhafterweise wenigstens in der geschlossenen Stellung des ersten Presswerkzeugs und des zweiten Presswerkzeugs aus. Das Werkstück ist insbesondere ein Formteil, vorzugsweise aus Faserverbund-Werkstoff. In den Arbeitsraum kann dabei wenigstens ein Werkstück einbringbar sein, vorzugsweise zwischen der wenigstens einen Membran, dem ersten Presswerkzeug und/oder dem zweiten Presswerkzeug. In dem Arbeitsraum ist vorteilhafterweise ein Werkstück wenigstens in der geschlossenen Stellung, insbesondere mittels der Membran, mit Druck und/oder Temperatur beaufschlagbar.

Zwischen der Membran und dem ersten Presswerkzeug und/oder dem zweiten Presswerkzeug bildet sich wenigstens in der geschlossenen Stellung wenigstens eine Kavität für ein Arbeitsmedium aus. Die Kavität wird dabei vorzugsweise durch die wenigstens eine Membran und das erste Presswerkzeug und/oder das zweite Presswerkzeug wenigstens abschnittsweise begrenzt. Die Kavität ist dazu bestimmt ein Arbeitsmedium in sich aufzunehmen. Mit anderen Worten: Die Kavität ist mit einem Arbeitsmedium befüllbar. Die Membran und das erste Presswerkzeug und/oder das zweite Presswerkzeug sind daher vorteilhafterweise in einer gasund/oder flüssigkeitsdichten Weise miteinander verbunden. Das Arbeitsmedium ist beispielsweise ein Gas oder eine Flüssigkeit. Das Arbeitsmedium ist zudem vorzugsweise mit Druck und/oder Temperatur beaufschlagbar. Der Druck und/oder die Temperatur, mit dem das Arbeitsmedium beaufschlagbar ist, ist an ein Werkstück übertragbar, insbesondere mittels der Membran. Die Membran ist vorzugsweise verformbar. Die Kavität ist zudem vorteilhafterweise in Richtung eines, vorzugsweise an die Membran angrenzendes, Werkstücks bewegbar und/oder verformbar, insbesondere durch die Befüllung mit einem Arbeitsmedium und/oder die Beaufschlagung mit Druck und/oder Temperatur. Vorteilhafterweise ist wenigstens in der geschlossenen Stellung die wenigstens eine Dichtung wenigstens abschnittsweise an einem Ende der Kavität vorgesehen und/oder wird wenigstens ein Ende der Kavität durch die wenigstens eine Dichtung begrenzt. Wenn vorzugsweise zwei oder wenigstens zwei Membranen vorgesehen sind, kann eine Kavität zwischen dem ersten Presswerkzeug und einer ersten Membran vorgesehen sein und vorzugsweise eine zweite Kavität zwischen dem zweiten Presswerkzeug und einer zweiten Membran.

Die Kavität ist durch die Dichtung wenigstens in der geschlossenen Stellung wenigstens abschnittsweise abdichtbar und zur Abdichtung der Kavität ist eine Dichtungskraft mittels der Dichtung auf die Membran aufbringbar. Die Dichtungskraft kann dabei beispielsweise durch eine Presskraft, welche auf das erste Presswerkzeug und/oder das zweite Presswerkzeug aufbringbar ist und an die wenigstens eine Dichtung übertragbar ist, bewirkt werden. Die Dichtungskraft kann beispielsweise auch alternativ oder zusätzlich mittels der Gewichtskraft eines Bestandteils der Vorrichtung bewirkt werden.

Die Membran und das erste Presswerkzeug und/oder das zweite Presswerkzeug weisen außerdem unterschiedliche Wärmeausdehnungskoeffizienten auf. Vorzugsweise ist der Wärmeausdehnungskoeffizient der wenigstens einen Membran größer als der jeweilige Wärmeausdehnungskoeffizient des ersten Presswerkzeugs und/oder des zweiten Presswerkzeugs. Für das erste Presswerkzeug und/oder das zweite Presswerkzeug bietet es sich daher vorteilhafterweise an, diese aus Invar herzustellen, da Invar einen niedrigen Wärmeausdehnungskoeffizient aufweist.

Das Verfahren umfasst zudem den Schritt b): Aufbringen einer Dichtungskraft mittels der Dichtung auf die Membran, wobei durch das Aufbringen der Dichtungskraft auf die Membran die Kavität wenigstens abschnittsweise abgedichtet wird, und wobei durch die Dichtungskraft eine Reibungskraft zwischen der Membran und der Dichtung anliegt. Die Dichtungskraft drückt die Dichtung auf die Membran, sodass wenigstens abschnittsweise ein Arbeitsmedium nicht aus der Kavität entweichen kann. Die Größe der Reibungskraft hängt von der Größe der sie verursachenden Dichtungskraft ab, oftmals gibt es innerhalb bestimmter Grenzen einen etwa linearen Zusammenhang (das Verhältnis zwischen Reibungskraft und Anpresskraft wird auch als "Reibungskoeffizient" bezeichnet). Mit zunehmender Dichtungskraft erhöht sich beispielsweise auch die Reibungskraft zwischen der Membran und der Dichtung. Die Reibungskraft wirkt vorzugsweise entlang der Membranfläche und somit parallel zur Oberfläche der Membran. Vorzugsweise wirkt die Reibungskraft im Wesentlichen in horizontaler Richtung oder im Wesentlichen in vertikaler Richtung. Die Reibungskraft ist zudem der Bewegung der Membran und/oder den entlang der Membranfläche wirkenden und angrenzend an die Dichtung wirkenden Kräften entgegengerichtet. Die Reibungskraft wirkt daher vorzugsweise einer Relativbewegung zwischen der Membran und der Dichtung entgegen. Insbesondere wirkt die Reibungskraft einer Bewegung der Membran aus dem Arbeitsraum hinaus und/oder einer Bewegung der Membran in den Arbeitsraum hinein entgegen.

Bei der Reibungskraft kann es sich um Haftreibung oder Gleitreibung handeln, abhängig davon, ob zwischen der Dichtung und der Membran eine Relativbewegung stattfindet. Bewegen sich die Dichtung und die Membran relativ zueinander, liegt Gleitreibung vor. Bewegen sich die Dichtung und die Membran nicht relativ zueinander, liegt Haftreibung vor. Wird eine ausreichend große Kraft gegen die Haftreibung aufgebracht, sodass die Haftreibungsgrenze überschritten wird, kommt es zur Relativbewegung zwischen der Membran und der Dichtung, sodass Gleitreibung zwischen der Membran und der Dichtung vorliegt.

Das Verfahren umfasst zudem den Schritt c): Beaufschlagen der Membran mit Druck und/oder Temperatur, vorzugsweise mittels eines Arbeitsmediums in der Kavität. Es kann zudem vorgesehen sein, dass zusätzlich das erste Presswerkzeug und/oder das zweite Presswerkzeug mit Druck und/oder Temperatur beaufschlagt werden, insbesondere mittels des Arbeitsmediums in der Kavität. Zur Beaufschlagung der Membran, des ersten Presswerkzeugs und/oder des zweite Presswerkzeugs mittels des Arbeitsmediums mit Druck und/oder Temperatur, wird vorzugsweise das Arbeitsmedium selbst mit Druck und/oder Temperatur beaufschlagt. Alternativ oder zusätzlich kann die Membran, das erste Presswerkzeug und/oder das zweite Presswerkzeug mit Druck und/oder Temperatur beaufschlagt werden indem das erste Presswerkzeug und/oder das zweite Presswerkzeug mit Druck und/oder Temperatur beaufschlagt werden. Mittels der Beaufschlagung der Membran, des ersten Presswerkzeugs und/oder des zweiten Presswerkzeugs mit Druck und/oder Temperatur kann zudem ein Werkstück in dem Arbeitsraum mit Druck und/oder Temperatur beaufschlagt werden. Die Membran kann vorzugsweise das Werkstück wenigstens abschnittsweise kontaktieren und dadurch das Werkstück mit Druck und/oder Temperatur beaufschlagen.

Unter einer Beaufschlagung mit Temperatur wird vorliegend insbesondere ein Erwärmen und/oder ein Abkühlen verstanden.

Schritt c) umfasst zudem, dass sich die Membran wenigstens in dem Arbeitsraum wenigstens abschnittsweise ausdehnt, vorzugsweise stärker ausdehnt als das erste Presswerkzeug und/oder das zweite Presswerkzeug. Durch die Ausdehnung der Membran vergrößert sich die Membranfläche und/oder längt sich die Membran, insbesondere in dem Arbeitsraum. Die Membran, das erste Presswerkzeug und/oder das zweite Presswerkzeug dehnt sich vorzugsweise thermisch aus. Außerdem dehnt sich die Membran, das erste Presswerkzeug und/oder das zweite Presswerkzeug insbesondere aufgrund der Beaufschlagung mit Druck und/oder Temperatur aus. Um ein Ausdehnen zu erreichen, handelt es sich bei der Beaufschlagung mit Temperatur insbesondere um ein Erwärmen. Alternativ oder zusätzlich kann sich die Membran, das erste Presswerkzeug und/oder das zweite Presswerkzeug aufgrund der Beaufschlagung mit Druck und/oder Temperatur zusammenziehen. In diesem Fall kann es zudem vorgesehen sein, dass sich die Membran stärker zusammenzieht als das erste Presswerkzeug und/oder das zweite Presswerkzeug. Um ein Zusammenziehen zu erreichen, handelt es sich bei der Beaufschlagung mit Temperatur insbesondere um ein Abkühlen.

Das Verfahren kann daher einen Schritt c1) umfassen, wobei der Schritt c1) umfasst: Beaufschlagen der Membran, des ersten Presswerkzeug und/oder des zweite Presswerkzeug mit Druck und/oder Temperatur, vorzugsweise mittels des Arbeitsmediums in der Kavität, wobei sich die Membran wenigstens in dem Arbeitsraum wenigstens abschnittsweise zusammenzieht, insbesondere thermisch zusammenzieht. Dabei kann insbesondere vorgesehen sein, dass sich die Membran stärker zusammenzieht als das erste Presswerkzeug und/oder das zweite Presswerkzeug. Der Schritt c1) kann dabei vor und/oder nach dem Schritt c) erfolgen. Es kann also ein Abkühlen der Membran, dem ersten Presswerkzeug und/oder dem zweiten Presswerkzeug vor und/oder nach dem Erwärmen der Membran, des ersten Presswerkzeugs und/oder des zweiten Presswerkzeugs vorgesehen sein,

Schritt c) umfasst außerdem, dass die Membran mit Druck beaufschlagt wird, vorzugsweise mittels des Arbeitsmediums in der Kavität. Diese Beaufschlagung der Membran mit Druck kann insbesondere die bereits erläuterte Beaufschlagung mit Druck und/oder Temperatur, vorzugsweise mittels eines Arbeitsmediums in der Kavität, sein. Die Membran kann jedoch auch alternativ oder zusätzlich anderweitig mit Druck beaufschlagt werden.

Schritt c) umfasst ferner, dass der Druck einer Ausdehnung der Membran in die Kavität entgegenwirkt und dadurch eine Ausdehnungskraft entlang der Membranfläche bewirkt. Bei dem Druck handelt es sich um den Druck mit dem die Membran beaufschlagt wird. Durch die Ausdehnung der Membran vergrößert sich die Membranfläche und/oder längt sich die Membran, insbesondere der Abschnitt der Membran der in dem Arbeitsraum angeordnet ist. Ein Ausdehnen, insbesondere Aufwölben, der Membran, in die Kavität hätte dabei zur Folge, dass die Membran nicht mehr im Wesentlichen durchgängig an dem zu bearbeitenden bzw. herzustellenden Werkstück anliegt und somit das Werkstück nicht gleichmäßig mit Druck und/oder Temperatur beaufschlagt werden kann. Zudem kann es durch ein Aufwölben oder Auffalten der Membran zu hohen Belastungen und somit zu Beschädigungen an der Membran kommen. Um dies zu verhindern, muss dem Ausdehnen, insbesondere dem Aufwölben, der Membran in die Kavität mit einem ausreichenden Druck entgegengewirkt werden. Der Druck, mit welchem die Membran beaufschlagt wird, ist daher vorteilhafterweise wenigstens gleich groß, vorzugsweise größer, als der Druck mit dem die Membran, insbesondere aufgrund der Ausdehnung der Membran, in Richtung der Kavität wirkt.

Unter "entlang der Membranfläche" wird vorliegend vorzugsweise in Richtung der Membranfläche verstanden. Bei der Membranfläche handelt es sich zudem vorzugsweise um die Membranfläche, welche an das zu bearbeitende bzw. herzustellende Werkstück wenigstens in der geschlossenen Stellung angrenzt.

Unter einem Ausdehnen, insbesondere Aufwölben, der Membran in die Kavität wird vorliegend insbesondere ein Ausdehnen der Membran in Richtung der angrenzenden Kavität verstanden, insbesondere in Richtung des Bereichs der Kavität, der an den sich ausdehnenden Bereich der Membran angrenzt. Ist die Membran beispielsweise horizontal ausgerichtet, ist ein Ausdehnen in die Kavität ein Ausdehnen mit wenigstens einer vertikalen Komponente in Richtung der angrenzenden Kavität.

Der Druck, mit dem die Membran beaufschlagt wird und der einer Ausdehnung der Membran in die Kavität entgegenwirkt, bewirkt zudem eine Ausdehnungskraft entlang der Membranfläche. Die Ausdehnungskraft wirkt dabei vorzugsweise wenigstens abschnittsweise, insbesondere angrenzend an die Dichtung, entlang der Membranfläche in Richtung der Dichtung oder von der Dichtung weg.

Die Ausdehnungskraft wird vorzugsweise dadurch bewirkt, dass der Druck, mit dem die Membran beaufschlagt wird, wenigstens teilweise entlang der Membranfläche abgeleitet wird. Durch die Beaufschlagung der Membran mit Druck wird die Membran zudem wenigstens abschnittsweise gegen das zu bearbeitenden bzw. herzustellende Werkstück gedrückt. Dadurch wird die Membran zwischen dem zu bearbeitenden bzw. herzustellenden Werkstück und dem Druck, mit dem die Membran beaufschlagt wird, wenigstens abschnittsweise eingespannt. Die Membran kann sich aufgrund dieser Einspannung wenigstens abschnittsweise, vorzugsweise im Wesentlichen, lediglich im Wesentlichen quer zu der Einspannung und somit entlang der Membranfläche ausdehnen. Dies kann ebenfalls die Ausdehnungskraft entlang der Membranfläche bewirken oder wenigstens beeinflussen.

Schritt c) umfasst außerdem, dass die Ausdehnungskraft wenigstens angrenzend zu der Dichtung der Reibungskraft zwischen der Membran und der Dichtung entgegenwirkt. Wenn sich die Membran ausdehnt wirkt die Ausdehnungskraft angrenzend zu der Dichtung entlang der Membranfläche aus dem Arbeitsraum hinaus. In diesem Fall wirkt die Reibungskraft einer Bewegung der Membran aus dem Arbeitsraum hinaus entgegen und/oder wirkt die Reibungskraft entlang der Membranfläche in Richtung des Arbeitsraums. Wenn sich die Membran zusammenzieht wirkt die Reibungskraft einer Bewegung der Membran in den Arbeitsraum hinein entgegen und/oder wirkt die Reibungskraft entlang der Membranfläche von dem Arbeitsraum weg. Die Ausdehnungskraft wirkt zudem vorzugsweise im Kontaktbereich der Dichtung und der Membran der Reibungskraft zwischen der Membran und der Dichtung entgegen.

Während des Schritts c) ist die Membran, insbesondere aufgrund der Beaufschlagung mit Druck und/oder Temperatur, wenigstens abschnittsweise in Anlage mit dem zu bearbeitenden bzw. herzustellenden Werkstück.

Erfindungsgemäß ist vorgesehen, dass die Membran an der Dichtung vorbeiführbar ist und dass in Schritt c) die Membran aufgrund der Ausdehnungskraft wenigstens abschnittsweise an der Dichtung vorbeigeführt wird. Indem die Membran an der Dichtung vorbeiführbar ist, kann ein gleichmäßiges Anliegen der Membran an dem zu bearbeitenden bzw. herzustellenden Werkstück sichergestellt werden, ohne dabei die Membran zu hoch zu belasten. Bei einer Ausdehnung der Membran kann nämlich die Fläche bzw. der Abschnitt der Membran, um die sich die Membranfläche vergrößert hat und/oder um die sich die Membran gelängt hat, aus dem Arbeitsraum hinausgeführt werden. Auffaltungen oder Aufwölbungen der Membran, welche zu Belastungen der Membran führen könnten, werden somit vermieden. Die Membran kann dadurch im Wesentlichen durchgängig an dem zu bearbeitenden bzw. herzustellenden Werkstück anliegen. Bei einem Zusammenziehen der Membran ermöglicht die Vorbeiführbarkeit der Membran an der Dichtung wiederum, dass eine Fläche bzw. ein Abschnitt der Membran in den Arbeitsraum nachgeführt werden kann, insbesondere in dem Umfang in dem sich die Membranfläche verringert und/oder die Membran sich verkürzt hat. Die Membran kann somit im Wesentlichen durchgängig an dem zu bearbeitenden bzw. herzustellenden Werkstück anliegen, ohne jedoch zu großen Belastungen, insbesondere Zugspannungen, ausgesetzt zu sein.

Indem die Membran aufgrund der Ausdehnungskraft wenigstens abschnittsweise an der Dichtung vorbeigeführt wird, kann die Belastung der Membran ebenfalls reduziert werden. Für das Vorbeiführen der Membran an der Dichtung, insbesondere bei einem Ausdehnen der Membran, kann aufgrund der Ausdehnungskraft auf ein Vorspannen der Membran verzichtet werden oder wenigstens die an die Membran angelegte Vorspannung reduziert werden. Die Ausdehnungskraft muss jedoch nicht alleine das Vorbeiführen der Membran an der Dichtung vorbei bewirken. Maßgeblich ist daher für das Vorbeiführen der Membran an der Dichtung vorzugsweise, dass die Summe der Kräfte, die entlang der Membranfläche der Membran wirken, die der Reibungskraft zwischen der Membran und der Dichtung entgegenwirken und angrenzend an die Dichtung wirken, größer ist als die Reibungskraft zwischen der Membran und der Dichtung. Die Summe der Kräfte, die entlang der Membranfläche der Membran wirken, die der Reibungskraft zwischen der Membran und der Dichtung entgegenwirken und angrenzend an die Dichtung wirken, umfasst dabei wenigstens die Ausdehnungskraft angrenzend an die Dichtung. Vorzugsweise ist die Ausdehnungskraft angrenzend an die Dichtung zudem die größte Kraft, die entlang der Membranfläche wirkt, die der Reibungskraft zwischen der Membran und der Dichtung entgegenwirkt und angrenzend an die Dichtung wirkt. Durch das Vorbeiführen der Membran an der Dichtung wird die Membran vorzugsweise gespannt und/oder liegt die Membran im Wesentlichen durchgängig an dem zu bearbeitenden bzw. herzustellenden Werkstück an.

Vorliegend wird im Zusammenhang mit einer Kraft und/oder Kräften immer von dem Betrag der jeweiligen Kraft und/oder der jeweiligen Kräfte ausgegangen.

Die Membran kann zudem relativ zu dem ersten Presswerkzeug und/oder dem relativ zu dem zweiten Presswerkzeug bewegbar sein, insbesondere aufgrund der Ausdehnungskraft relativ zu dem ersten Presswerkzeug und/oder relativ zu dem zweiten Presswerkzeug bewegt werden. Zwischen der Membran und dem ersten Presswerkzeug, dem zweiten Presswerkzeug und/oder einem anderen Bestandteil der Vorrichtung kann ebenfalls Reibung vorliegen. Da jedoch üblicherweise die Reibungskraft zwischen der Membran und der Dichtung die größte an der Membran anliegende Reibungskraft ist die einem Vorbeiführen der Membran an der Dichtung entgegenwirkt, kommt es für das Vorbeiführen der Membran an der Dichtung auf die Reibungskraft zwischen der Membran und der Dichtung an.

Gemäß einer ersten Ausgestaltung des Verfahrens ist es vorgesehen, dass der Schritt b) und der Schritt c) sich wenigstens zeitlich überschneiden. Hierdurch wird sichergestellt, dass die Kavität durch die Dichtungskraft ausreichend abgedichtet wird und gleichzeitig die Membran an der Dichtung vorbeigeführt werden kann. Der Schritt b) kann insbesondere vor dem Schritt c) beginnen und/oder erst nach dem Schritt c) enden. Dadurch kann eine Leckage von Arbeitsmedium aus der Kavität besonders zuverlässig vermieden werden.

Eine weitere Ausbildung des Verfahrens sieht vor, dass die Ausdehnungskraft größer ist als die Reibungskraft zwischen der Membran und der Dichtung. Hierdurch kann ein zuverlässiges Vorbeiführen der Membran an der Dichtung sichergestellt werden, Zudem kann auf eine Vorspannung der Membran verzichtet werden oder diese wenigstens reduziert werden. Bei der Ausdehnungskraft handelt es sich insbesondere um die Ausdehnungskraft angrenzend zu der Dichtung, die der Reibungskraft zwischen der Membran und der Dichtung entgegenwirkt. Die Ausdehnungskraft ist dabei vorzugsweise wenigstens abschnittsweise während Schritt b) und/oder wenigstens abschnittsweise während Schritt c), insbesondere durchgängig während Schritt b) und/oder durchgängig während Schritt c), größer als die Reibungskraft zwischen der Membran und der Dichtung. Hierdurch kann sichergestellt werden, dass das Vorbeiführen der Membran an der Dichtung zuverlässig erfolgt.

Eine Ausgestaltung zeichnet sich dadurch aus, dass das Verfahren die folgenden Schritte umfasst, die nach Schritt a) und vorzugsweise vor Schritt b) und/oder vor Schritt c) erfolgen: a1) Bereitstellen von wenigstens einem Werkstück, a2) Einlegen des Werkstücks in die Vorrichtung, insbesondere in den Arbeitsraum, und a3) Bewegen des ersten Presswerkzeugs und/oder des zweiten Presswerkzeugs in die geschlossene Stellung. Das wenigstens eine Werkstück kann eine Matrix und in die Matrix eingelegte Fasern aufweisen. Bei den in der Matrix eingelegten Fasern kann es sich beispielsweise um Kohlenstofffasern ("Carbonfasern"), Glasfasern, Aramidfasern oder dergleichen handeln. Die Fasern können beispielsweise als Halbzeuge in Form von Matten, Vliesen, Gelegen, Geweben, Geflechten oder Gestricken verwendet werden. Die Matrix bzw. das Harz kann beispielsweise aus thermoplastischem Kunststoff gebildet sein. Bei dem Werkstück kann es sich um bereits fertige "Faser-Matrix-Halbzeuge" handeln, die auch als "Prepreg" bezeichnet werden. Für das Bewegen des ersten Presswerkzeugs und/oder des zweiten Presswerkzeugs in die geschlossene Stellung werden die Presswerkzeug, vorzugsweise entlang einer Pressachse, zueinander zugefahren. Bei dem Bewegen des ersten Presswerkzeugs und/oder des zweiten Presswerkzeugs in die geschlossene Stellung kann es sich insbesondere um eine im Wesentlichen lineare Bewegung handeln. Vorzugsweise erfolgt der Schritt a1) vor dem Schritt a2) und vor dem Schritt a3). Der Schritt a2) erfolgt zudem vorzugsweise nach dem Schritt a1) und vor dem Schritt a3). Es kann zudem vorgesehen sein, dass der Schritt b) vor den Schritten a1), a2) und a3) erfolgt, insbesondere kann der Schritt b) wenigstens vor dem Schritt a3) erfolgen. Hierdurch kann vor dem Bewegen des ersten Presswerkzeugs und des zweiten Presswerkzeugs in die geschlossene Stellung die Kavität bereits abgedichtet werden und auch bereits mit Arbeitsmedium befüllt werden.

Gemäß einer weiteren Ausgestaltung des Verfahrens ist vorgesehen, dass die in Schritt a) bereitgestellte Vorrichtung wenigstens eine Einrichtung zur Veränderung der Vorspannung der Membran umfasst. Die Einrichtung zur Vorspannung der Membran kann beispielsweise durch eine Feder mit verstellbarem Federweg bzw. verstellbarer Vorspannung realisiert werden. Alternativ oder zusätzlich kann die Vorspannung durch die Einrichtung zur Vorspannung der Membran hydraulisch und/oder pneumatisch realisiert werden. Durch eine derartige Einrichtung kann eine Vorspannung der Membran eingestellt werden und auch verändert werden, beispielsweise, um die Vorspannung an das herzustellende bzw. zu bearbeitende Werkstück anzupassen. Die Einstellung einer Vorspannung und deren Veränderbarkeit ermöglichen es, dass die Membran bereits eine Vorspannung aufweist, bevor das Werkstück mit Druck und/oder Temperatur beaufschlagt wird, insbesondere bereits bevor das in der Kavität befindliche Arbeitsmedium mit Druck und/oder Temperatur beaufschlagt wird. Ebenso kann die Einrichtung zur Veränderung der Vorspannung der Membran das Vorbeiführen der Membran an der Dichtung, insbesondere während des Schritts c), mitbewirken, vorzugsweise durch das Aufbringen einer Vorspannkraft auf die Membran.

Nach einer Ausbildung ist vorgesehen, dass das Verfahren den folgenden Schritt umfasst, der nach Schritt a) und, vorzugsweise, vor Schritt b) und/oder vor Schritt c) erfolgt: a4) Vorspannen der Membran mittels der Einrichtung zur Veränderung der Vorspannung. Durch die Vorspannung wird sichergestellt, dass die Membran bereits zu Beginn der Einwirkung auf das Werkstück eine glatte Oberfläche aufweist und nicht erst durch das in der Kavität befindliche Arbeitsmedium unter Spannung gesetzt und somit "glatt gezogen" wird. Dies hat den Vorteil, dass bereits zu Beginn der Temperatur- und/oder Druckeinwirkung eine gleichmäßige Einwirkung der Membran auf das Werkstück erfolgt und die Membran vorzugsweise im Wesentlichen durchgängig an der Membran anliegt. Indem der Schritt a4) vorzugsweise vor dem Schritt b) und/oder vor dem Schritt c) erfolgt, kann die Membran bereits eine Vorspannung aufweisen, bevor die Membran mit Druck und/oder Temperatur beaufschlagt wird, insbesondere bereits bevor das in der Kavität befindliche Arbeitsmedium mit Druck und/oder Temperatur beaufschlagt wird. Der Schritt a4) kann nach den Schritten a1), a2) und a3) erfolgen oder alternativ wenigstens vor dem Schritt a3), insbesondere vor den Schritten a1), a2) und a3). Vorteilhafterweise ist es zudem vorgesehen, dass der Schritte a4) und der Schritt b) und/oder der Schritt c) sich wenigstens zeitlich überschneiden. Der Schritt a4) kann zudem gleichzeitig mit wenigstens mit dem Schritt b) und/oder wenigstens dem Schritt c) erfolgen. Der Schritt a4) kann insbesondere vor dem Schritt b) und/oder vor dem Schritt c) beginnen und erst nach dem Schritt b) und/oder erst nach dem Schritt c) enden. Hierdurch wird sichergestellt, dass insbesondere während dem Vorbeiführen der Membran an der Dichtung, eine ausreichende Vorspannung an der Membran anliegt.

Eine weitere Ausführungsform des Verfahrens zeichnet sich dadurch aus, dass durch das Vorspannen der Membran gemäß Schritt a4) eine Vorspannkraft an der Membran anliegt und, vorzugsweise, dass die Vorspannkraft, insbesondere während des Schritts b) und/oder während des Schritts c), geringer ist als die Reibungskraft zwischen der Membran und der Dichtung. Die Vorspannkraft wirkt entlang der Membranfläche und wirkt vorzugsweise entgegen der Reibungskraft zwischen der wenigstens einen Membran und der wenigstens einen Dichtung, insbesondere wenn die Reibungskraft einer Bewegung der wenigstens einen Membran aus dem Arbeitsraum hinaus entgegenwirkt. Die durch das Vorspannen gemäß Schritt a4) auf die Membran aufgebrachte Vorspannungskraft liegt vorzugsweise auch wenigstens während dem Schritt b) und/oder wenigstens während dem Schritt c) an der Membran an. Die Vorspannkraft kann dadurch das Vorbeiführen der Membran an der Dichtung, insbesondere in Schritt c), mitbewirken, sodass bereits eine geringe Ausdehnungskraft ausreicht, um die Membran an der Dichtung vorbeizuführen. Indem die Vorspannkraft, die insbesondere der Reibungskraft zwischen der Membran und der Dichtung entgegenwirkt, geringer ist als die Reibungskraft zwischen der Membran und der Dichtung kann die Belastung der Membran reduziert werden und somit die Lebensdauer der Membran erhöht werden. Insbesondere während des Schritts b) und/oder während des Schritts c) bietet es sich an, dass die Vorspannkraft, die insbesondere der Reibungskraft zwischen der Membran und der Dichtung entgegenwirkt, geringer ist als die Reibungskraft zwischen der Membran und der Dichtung, da in diesen Schritten die Membran durch die Beaufschlagung mit Druck und/oder Temperatur bereits hoch belastet ist. Während des Schritts c) kommt insbesondere hinzu, dass die Membran durch die Beaufschlagung mit Druck bereits im Wesentlichen durchgängig an dem herzustellenden bzw. zu bearbeitenden Werkstück anliegt. Die Vorspannkraft kann zudem auch vor und/oder nach dem Schritt b) und/oder dem Schritt c) geringer sein als die Reibungskraft zwischen der Membran und der Dichtung.

Nach einer Ausbildung des Verfahrens ist vorgesehen, dass während dem Schritt b) und/oder während dem Schritt c) die an der Membran anliegende Vorspannkraft durch die Einrichtung zur Veränderung der Vorspannung verändert, insbesondere reduziert, wird. Hierdurch kann die Belastung der Membran während des Verfahrens möglichst niedrig gehalten werden, da insbesondere während des Schritts b) und/oder während des Schritts c) hohe Kräfte auf die Membran wirken. Die Vorspannkraft kann dabei abhängig von der Dichtungskraft verändert werden. Vorzugsweise wird die Vorspannkraft reduziert, wenn die Dichtungskraft reduziert wird und/oder die Vorspannkraft erhöht, wenn die Dichtungskraft erhöht wird. Alternativ oder zusätzlich kann die Vorspannkraft abhängig von der Beaufschlagung der Membran mit Druck und/oder Temperatur verändert werden. Vorzugsweise wird die Vorspannkraft reduziert, wenn der Druck und/oder die Temperatur reduziert wird und/oder die Vorspannkraft erhöht, wenn der Druck und/oder die Temperatur erhöht wird. Die Vorspannkraft kann zudem vor und/ oder nach dem Schritt b) und/oder dem Schritt c) verändert werden, vorzugsweise erhöht und/oder reduziert werden.

Eine weitere Ausgestaltung des Verfahrens zeichnet sich dadurch aus, dass die Summe aus Ausdehnungskraft und Vorspannkraft, insbesondere während des Schritt b) und/oder während des Schritt c), größer ist als die Reibungskraft zwischen der Membran und der Dichtung. Dies ermöglicht es die Membran entgegen der Reibungskraft an der Dichtung vorbeizuführen. Es handelt sich dabei vorzugsweise um die Ausdehnungskraft angrenzend an die wenigstens eine Dichtung sowie die Vorspannkraft die entlang der Membran in Richtung dieser Ausdehnungskraft wirkt. Die Ausdehnungskraft muss jedoch nicht alleine das Vorbeiführen bewirken und kann daher niedriger ausfallen. Es kann daher vorteilhafterweise vorgesehen sein, dass die Ausdehnungskraft angrenzend an die Dichtung kleiner ist als die Reibungskraft zwischen der Membran und der Dichtung, die der Ausdehnungskraft vorzugsweise entgegenwirkt. Vorteilhafterweise ist in diesem Fall ebenfalls die Vorspannkraft, kleiner als die Reibungskraft zwischen der Membran und der Dichtung.

Eine weitere Ausbildung des Verfahrens sieht vor, dass während Schritt b) und/oder während Schritt c) der Druck und/oder die Temperatur des Arbeitsmediums in der Kavität verändert werden. Indem der Druck und/oder die Temperatur des Arbeitsmediums in der Kavität veränderbar ist, ist auch der Druck, der auf die Membran und/oder das Werkstück einwirkt und/oder die Temperatur, die auf die Membran und/oder das Werkstück einwirkt, veränderbar. Da sowohl der Druck als auch die Temperatur verändert werden können, ist es möglich, anstelle eines konstanten Drucks und einer konstanten Temperatur auch sich verändernde Druckund Temperaturverläufe vorzusehen. Beispielsweise kann zunächst ein Anstieg von Druck und/oder Temperatur, danach ein Konstanthalten von Druck und/oder Temperatur und abschließend ein Absenken von Druck und/oder Temperatur vorgesehen sein. Ermöglicht wird eine Veränderung des Druckes des Arbeitsmediums beispielsweise durch eine Veränderung der Menge des in der Kavität befindlichen Arbeitsmediums durch Zufluss oder Abfluss von Arbeitsmedium. Eine Veränderung der Temperatur des Arbeitsmediums kann hingegen beispielsweise dadurch erreicht werden, dass das Arbeitsmedium zirkuliert und das zufließende Arbeitsmedium eine höhere oder niedrigere Temperatur als das in der Kavität befindliche Arbeitsmedium aufweist und das in der Kavität befindliche Arbeitsmedium somit erwärmt oder kühlt.

Gemäß einer weiteren Ausführungsform des Verfahrens ist vorgesehen, dass die in Schritt a) bereitgestellte Vorrichtung wenigstens eine Einrichtung zur Veränderung der Dichtungskraft umfasst, vorzugsweise angrenzend an die Dichtung. Durch die Einrichtung zur Veränderung der Dichtungskraft kann außerdem die Reibungskraft, die auf die Membran wirkt, verändert werden. Die Veränderbarkeit der Dichtungskraft kann beispielsweise durch einen auf die Dichtung einwirkenden Aktuator erreicht werden, der die Dichtung stärker oder weniger stark auf die Membranoberfläche presst. Wenn zwei oder mehr Dichtungen vorgesehen sind, ist vorzugsweise an jeder Dichtung eine Einrichtung zur Veränderung der Dichtungskraft vorgesehen, so dass die Dichtungskraft an jeder Dichtung unabhängig von den anderen Dichtungen eingestellt und verändert werden kann. Indem die Dichtungskraft während der Beaufschlagung der Membran, des Arbeitsmediums und/oder des Werkstücks mit Druck und/oder mit Temperatur verändert wird, ist es möglich, die Wirkungsweise der Dichtung an die sich während des Verfahrens ändernden Anforderungen anzupassen. Die bedarfsgerechte Anpassung der Wirkungsweise der Dichtung ist deshalb besonders vorteilhaft, da die beiden Ziele einer besonders guten Abdichtung (hohe Dichtungskraft) und einer besonders guten Beweglichkeit der Membran, insbesondere guten Vorbeiführbarkeit der Membran an der Dichtung, (niedrige Dichtungskraft) nicht gleichzeitig und in maximalem Umfang erreicht werden können; es besteht insoweit ein Zielkonflikt. Eine Möglichkeit der Auflösung eines derartigen Zielkonflikts besteht in der Festlegung einer Rangordnung zwischen den konkurrierenden Zielen; beispielsweise wird eine gute Abdichtung als Hauptziel definiert, während eine gute Beweglichkeit der Membran lediglich als Nebenziel definiert wird. Indem die Dichtungskraft während des Verfahrens verändert werden kann, ist es möglich, die Rangordnung zwischen den konkurrierenden Zielen während des Verfahrens zu verändern. Beispielsweise kann zu Beginn des Verfahrens (z.B. in der Aufheizphase bei ansteigenden Temperaturen) die Beweglichkeit der Membran als Hauptziel definiert werden, weil in dieser Phase, insbesondere thermisch bedingte, Ausdehnungen der Membran ermöglicht werden sollen. Erreicht wird dies durch die Einstellung einer niedrigen Dichtungskraft und somit einer niedrigen Reibungskraft zwischen der Membran und der Dichtung. Im weiteren Verlauf des Verfahrens (z.B. bei konstant hohen Temperaturen und hohen Drücken) kann demgegenüber die gute Abdichtung der Membran als Hauptziel definiert werden, weil in dieser Phase ein hohes Leckagerisiko besteht, während, insbesondere thermisch bedingte, Ausdehnungen der Membran infolge der etwa konstanten Temperaturen kaum noch auftreten. Dies kann durch die Einstellung einer höheren Dichtungskraft und somit einer höheren Reibungskraft zwischen der Membran und der Dichtung, erreicht werden. Durch die Einstellbarkeit bzw. Veränderbarkeit der Dichtungskraft wird daher eine situations- und bedarfsgerechte Priorisierung von konkurrierenden Zielen ermöglicht.

Eine Ausgestaltung des Verfahrens zeichnet sich dadurch aus, dass die in Schritt a) bereitgestellte Vorrichtung wenigstens eine zweite Membran umfasst, wobei sich zwischen der wenigstens zweiten Membran und dem ersten Presswerkzeug und/oder dem zweiten Presswerkzeug wenigstens in der geschlossenen Stellung wenigstens eine zweite Kavität für ein Arbeitsmedium ausbildet, wobei zur Abdichtung der zweiten Kavität eine Dichtungskraft mittels wenigstens einer zweiten Dichtung auf die zweite Membran aufbringbar ist, und wobei die zweite Membran an der zweiten Dichtung vorbeiführbar ist. Die Verwendung einer zweiten Membran erlaubt eine mehrseitige Einwirkung auf das Werkstück auch ohne eine Umlenkung der Membran. Bei der Verwendung von zwei separaten Membranen kann somit besonders individuell auf das Werkstück eingewirkt werden, beispielsweise um auf lokale Verformungen des Werkstücks zu reagieren. Die wenigstens eine Membran kann vorzugsweise mit dem ersten Presswerkzeug verbunden sein und die wenigstens zweite Membran kann mit dem zweiten Presswerkzeug verbunden sein. Die wenigstens eine Membran und die wenigstens zweite Membran können eine identische Dicke aufweisen oder unterschiedliche Dicken aufweisen. Die wenigstens eine Membran, die wenigstens zweite Membran, die wenigstens eine Kavität und/oder die wenigstens zweite Kavität können zudem jeweils mit dem im Wesentlich gleichen Druck und/oder der im Wesentlich gleichen Temperatur beaufschlagt werden und/oder mit unterschiedlichem Druck und/oder unterschiedlicher Temperatur beaufschlagt werden, insbesondere während dem Schritt b) und/oder während dem Schritt c). Vorzugsweise ist zudem vorgesehen, dass im Schritt b) durch das Aufbringen einer Dichtungskraft auf die wenigsetens zweite Membran eine Reibungskraft zwischen der wenigstens zweiten Membran und der wenigstens zweiten Dichtung anliegt. Vorteilhafterweise ist zudem im Schritt c) vorgesehen, dass die wenigstens zweite Membran mit Druck und/oder Temperatur beaufschlagt wird, vorzugsweise mittels eines Arbeitsmediums in der wenigstens zweiten Kavität, wobei sich die wenigstens zweite Membran wenigstens in dem Arbeitsraum wenigstens abschnittsweise ausdehnt, vorzugsweise stärker ausdehnt als das erste Presswerkzeug und/oder das zweite Presswerkzeug, wobei die wenigstens zweite Membran mit Druck beaufschlagt wird, vorzugsweise mittels des Arbeitsmediums in der wenigstens zweiten Kavität, wobei der Druck einer Ausdehnung der wenigstens zweiten Membran in die wenigstens zweite Kavität entgegenwirkt und dadurch eine zweite Ausdehnungskraft entlang der Membranfläche der wenigstens zweiten Membran bewirkt. Die zweite Ausdehnungskraft wirkt wenigstens angrenzend zu der wenigstens zweiten Dichtung der Reibungskraft zwischen der wenigstens zweiten Membran und der wenigstens zweiten Dichtung entgegen. Vorzugsweise wird zudem in Schritt c) die wenigstens zweite Membran aufgrund der zweiten Ausdehnungskraft wenigstens abschnittsweise an der wenigstens zweiten Dichtung vorbeigeführt.

Gemäß einer Ausbildung des Verfahrens ist vorgesehen, dass in Schritt b) und/oder in Schritt c) der Druck des in der Kavität befindlichen Arbeitsmediums wenigstens auf 1,2 bar, insbesondere auf 2 bar, angehoben wird und vorzugsweise, dass in Schritt b) und/oder in Schritt c) der Druck des in der Kavität befindlichen Arbeitsmediums bis auf einen Maximaldruck im Bereich zwischen 10 bar und 50 bar, insbesondere zwischen 15 bar und 30 bar angehoben wird. Durch ein Anheben des Drucks auf wenigstens 1,2 bar, insbesondere auf 2 bar, wird insbesondere sichergestellt, dass eine ausreichend große Ausdehnungskraft entlang der Membranfläche anliegt. Diese anfänglich angehobenen Werte sind jedoch stark abhängig von der Größe des Arbeitsraumes der Presse, sowie von der Stärke der Membran und können fallweise auch deutlich höher liegen, beispielsweise mindestens 2,5 bar, 4 bar, 5 bar oder gar 8 bar betragen. Als Faustformel kann hier gelten: 1,0 bar bis 2,0 bar je angefangenem Millimeter Membranstärke. Von diesen Werten aus wird dann auf den beschriebenen Arbeitsdruck heraufgesteuert oder geregelt. Fallweise kann der Maximaldruck in Schritt c) dann statt auf maximal 50 bar sogar auf maximal 70 bar angehoben werden.

Alternativ oder zusätzlich kann vorgesehen sein, dass in Schritt b) und/oder in Schritt c) die Temperatur des in der Kavität befindlichen Arbeitsmediums auf eine Maximaltemperatur im Bereich zwischen 280°C und 500°C, insbesondere zwischen 310°C und 410°C angehoben wird. Vorzugsweise wird bei beim Vorliegen von wenigstens zwei Kavitäten der Druck und/oder die Temperatur von beide Kavitäten entsprechend angehoben. Die zuvor genannten Drücke und die zuvor genannten Temperaturen haben bei der Herstellung von Formteilen aus Faserverbund-Werkstoff zu optimalen Ergebnissen geführt. Bei den angegebenen Werten handelt es sich um Maximalwerte; während der Herstellung in der Presse werden auch niedrigere Druckund Temperaturwerte erreicht, beispielsweise während der Aufwärmphase und während der Abkühlphase.

Eine weitere Ausbildung des Verfahrens zeichnet sich schließlich dadurch aus, dass das Verfahren den folgenden Schritt umfasst, der nach Schritt b) und/oder nach Schritt c) erfolgt: c) Öffnen der Vorrichtung und entnehmen des Werkstücks. Zum Öffnen der Vorrichtung wird das erste Presswerkzeug und/oder das zweite Presswerkzeug relativ zueinander in die offene Stellung bewegt. In der offenen Stellung ist ausreichend Platz zwischen den Presswerkzeugen vorhanden, um das Werkstück einfach und schnell entnehmen zu können.

Die Erfindung wird nachfolgend anhand einer lediglich bevorzugte Ausführungsbeispiele darstellenden Zeichnung näher erläutert. In der Zeichnung zeigen:
- Fig. 1A:: eine erste Ausgestaltung einer Vorrichtung zur Durchführung eines erfindungsgemäßen Verfahrens im Querschnitt in offener Stellung ohne eingelegtes Werkstück,
- Fig. 1B:: die Vorrichtung aus Fig. 1A in offener Stellung mit eingelegtem Werkstück,
- Fig. 1C:: die Vorrichtung aus Fig. 1A in geschlossener Stellung mit eingelegtem Werkstück,
- Fig. 2:: einen Teilbereich der Vorrichtung aus Fig. 1C in vergrößerter Ansicht,
- Fig. 3:: einen Ausschnitt der Vorrichtung aus Fig. 1C in vergrößerter Ansicht,
- Fig. 4A:: eine zweite Ausgestaltung einer Vorrichtung zur Durchführung eines erfindungsgemäßen Verfahrens im Querschnitt in offener Stellung ohne eingelegtes Werkstück,
- Fig. 4B:: die Vorrichtung aus Fig. 4A in offener Stellung mit eingelegtem Werkstück,
- Fig. 4C:: die Vorrichtung aus Fig. 4A in geschlossener Stellung mit eingelegtem Werkstück, und
- Fig. 5:: einen Ausschnitt der Vorrichtung aus Fig. 4C in vergrößerter Ansicht.

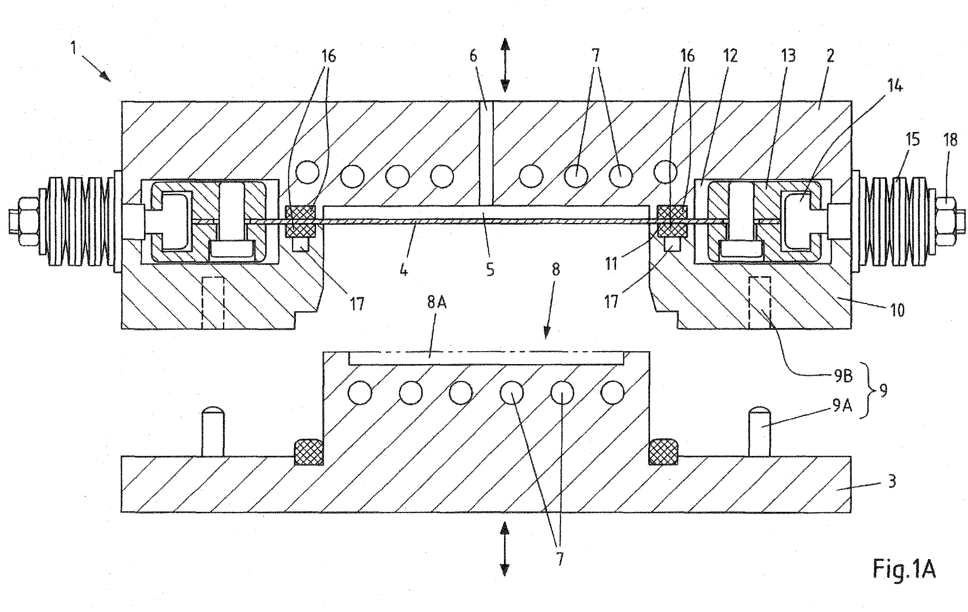

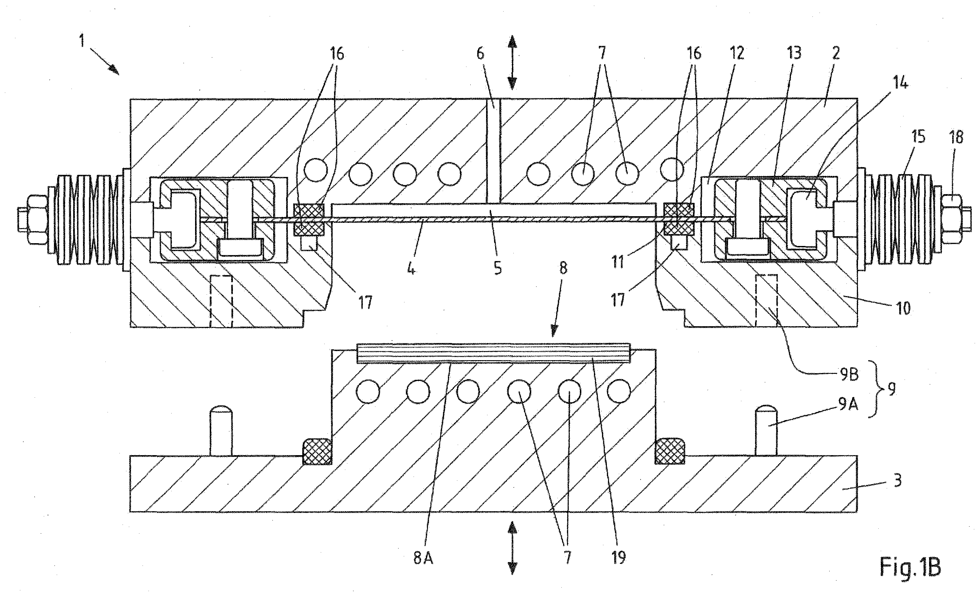

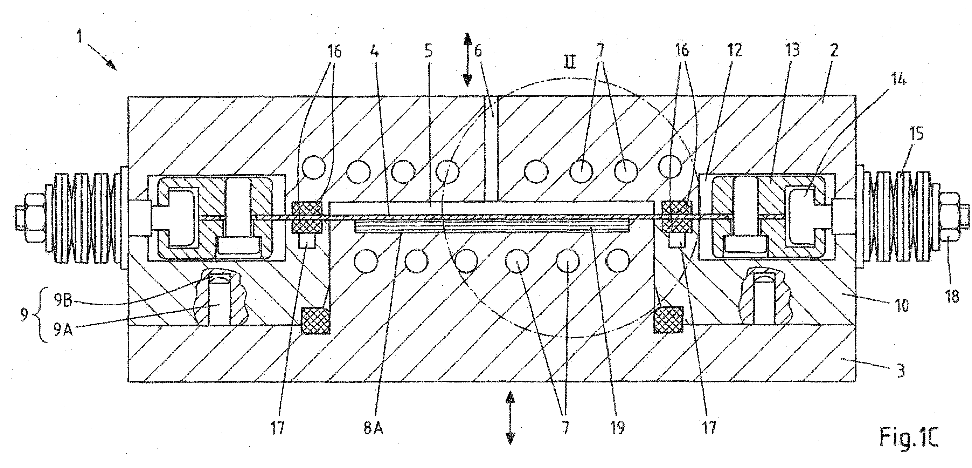

Fig. 1A zeigt eine erste Ausgestaltung einer Vorrichtung 1 zur Durchführung eines erfindungsgemäßen Verfahrens im Querschnitt in offener Stellung ohne eingelegtes Werkstück. Die Vorrichtung 1 umfasst ein erstes - oberes - Presswerkzeug 2 sowie ein zweites - unteres - Presswerkzeug 3. Die beiden Presswerkzeuge 2, 3 sind relativ zueinander bewegbar, beispielsweise in vertikaler Richtung (in Fig. 1A angedeutet durch Pfeile). Die beiden Presswerkzeuge 2, 3 sind dabei zwischen einer offenen Stellung und einer geschlossenen Stellung relativ zueinander bewegbar. Zudem umfasst die Presse eine Membran 4, die wenigstens abschnittsweise zwischen dem ersten Presswerkzeug 2 und dem zweiten Presswerkzeug 3 angeordnet ist. Die Membran 4 ist vorliegend mit dem ersten Presswerkzeug 2 verbunden. Alternativ zu der in Fig. 1 gezeigten Ausgestaltung könnte die Membran 4 auch mit dem zweiten Presswerkzeug 3 verbunden sein. Zwischen der Membran 4 und dem ersten Presswerkzeug 2 bildet sich eine Kavität 5 für ein Arbeitsmedium, beispielsweise Öl. Die Membran 4 ist aus Metall hergestellt und weist vorzugsweise eine Dicke im Bereich zwischen 0,2 mm und 3,5 mm auf. Die Kavität 5 kann über einen Kanal 6 mit dem Arbeitsmedium befüllt werden. Sowohl in dem ersten Presswerkzeug 2 als auch in dem zweiten Presswerkzeug 3 sind Bohrungen 7 vorgesehen, durch die ein Heizund/oder Kühlmedium geleitet werden kann.

Bei der in Fig. 1A gezeigten Ausgestaltung der Vorrichtung 1 bildet sich zwischen dem ersten Presswerkzeug 2 und dem zweiten Presswerkzeug 3 ein Arbeitsraum 8 aus, in den ein (in Fig. 1A nicht gezeigtes) Werkstück eingelegt werden kann. In der vorliegenden Ausgestaltung umfasst der Arbeitsraum 8 insbesondere eine Ausnehmung 8a in dem zweiten Presswerkzeug 3. Die beiden Presswerkzeuge 2, 3 weisen eine Führung 9 auf, die beispielsweise durch einen Vorsprung 9A und eine Ausnehmung 9B gebildet sein kann, wobei der Vorsprung 9A an dem zweiten Presswerkzeug 3 vorgesehen sein kann und wobei die Ausnehmung 9B an dem ersten Presswerkzeug 2 vorgesehen sein kann.

Die Membran 4 ist mit dem ersten Presswerkzeug 2 auf die folgende Weise verbunden: Das erste Presswerkzeug 2 weist ein umlaufendes Randelement 10 auf, das mit dem ersten Presswerkzeug 2 verschraubt ist (die Verschraubung ist in Fig. 1A nicht dargestellt). Zwischen dem ersten Presswerkzeug 2 und seinem Randelement 10 bildet sich ein Spalt 11, durch den die Membran 4 hindurch geführt wird. Der Spalt 11 mündet in einen Hohlraum 12, in dem eine Klemmeinrichtung 13 vorgesehen ist, in die die Membran 4 eingeklemmt ist. Die Klemmeinrichtung 13 ist mit einem Zuganker 14 verbunden, der durch eine Öffnung aus dem ersten Presswerkzeug 2 und dem Randelement 10 herausgeführt wird und dort durch eine sich an der Außenfläche abstützende Feder 15 nach außen gedrückt wird, wodurch die Membran 4 mit einer Vorspannung, insbesondere einer Vorspannkraft F_{V}, versehen werden kann. Zur Abdichtung der Kavität 5 ist in dem Spalt 11 eine Dichtung 16 vorgesehen, die eine Bewegung der Membran 4 erlaubt. Die Membran 4 ist somit an der Dichtung 16 vorbeiführbar. Angrenzend an die Dichtung 16 ist eine Einrichtung 17 zur Veränderung der Dichtungskraft vorgesehen. Angrenzend an die Feder 15 ist außerdem eine Einrichtung zur Veränderung der Vorspannung 18 vorgesehen.

Fig. 1B zeigt die Vorrichtung 1 aus Fig. 1A in offener Stellung mit eingelegtem Werkstück 19. Diejenigen Bereiche der Vorrichtung 1, die bereits zuvor beschrieben worden sind, sind in Fig. 1B mit entsprechenden Bezugszeichen versehen. Der Unterschied zu der in Fig. 1A gezeigten Stellung liegt darin, dass das Werkstück 19 in den Arbeitsraum 8, insbesondere die Ausnehmung 8A des zweiten Presswerkzeugs 3, eingelegt worden ist.

Fig. 1C zeigt die Vorrichtung 1 aus Fig. 1A in geschlossener Stellung. Diejenigen Bereiche der Vorrichtung 1, die bereits zuvor beschrieben worden sind, sind auch in Fig. 1C mit entsprechenden Bezugszeichen versehen. Die Vorrichtung 1 wurde geschlossen, indem die beiden Presswerkzeuge 2, 3 aufeinander zu in die geschlossene Stellung bewegt wurden. In der in Fig. 1C gezeigten Stellung wird das Werkstück 19 mit Druck und/oder Temperatur beaufschlagt. Die Beaufschlagung mit Druck erfolgt, indem ein Arbeitsmedium, beispielsweise Öl, durch den Kanal 6 in die Kavität 5 geleitet wird, wodurch die Membran 4 in Richtung des Werkstücks 19 gepresst wird. Die Beaufschlagung mit Temperatur kann auf unterschiedliche Weise erfolgen: Eine Möglichkeit besteht darin, das durch den Kanal 6 in die Kavität 5 geleitete Arbeitsmedium zu erwärmen, so dass die Wärme von dem in der Kavität 5 befindlichen Arbeitsmedium durch die Membran 4 auf das Werkstück 19 übertragen wird. Umgekehrt könnte das Arbeitsmedium gekühlt werden, um das Werkstück 19 zu kühlen. Alternativ oder zusätzlich hierzu kann vorgesehen sein, dass die Bohrungen 7 von einem Heiz- und/oder Kühlmedium durchströmt werden, wodurch zunächst die beiden Presswerkzeuge 2, 3 und anschließend auch die Membran 4 und das Werkstück 19 aufgeheizt oder abgekühlt werden können. Die Membran 4, das erste Presswerkzeug 2 und/oder das zweite Presswerkzeug 3 können auf dieselbe Weise mit Druck und/oder Temperatur beaufschlagt werden. Infolge der Druckeinwirkung ist das Werkstück 19 in der in Fig. 1C gezeigten Stellung komprimiert.

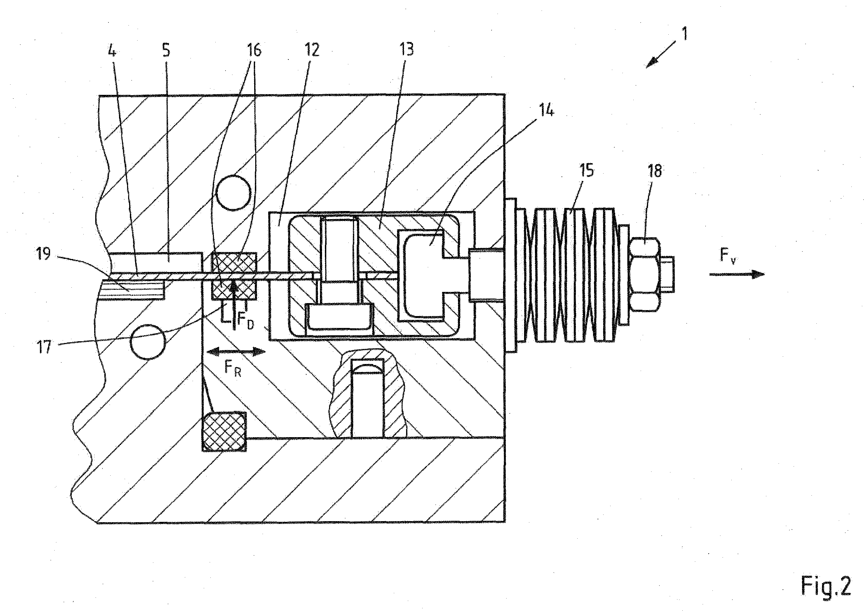

Fig. 2 zeigt einen Teilbereich der Vorrichtung 1 aus Fig. 1C in vergrößerter Ansicht. Diejenigen Bereiche der Vorrichtung 1, die bereits zuvor beschrieben worden sind, sind auch in Fig. 2 mit entsprechenden Bezugszeichen versehen. In Fig. 2 sind die Einspannung und Abdichtung der Membran 4 besonders gut zu erkennen. Die Kavität 5 wird wenigstens abschnittsweise abgedichtet, indem die Dichtung 16 auf die Membran 4 eine Dichtungskraft F_{D} aufbringt, vorzugsweise indem die Dichtung 16 mit der Dichtungskraft Fo auf die Membran 4 drückt. Die Dichtungskraft F_{D} wirkt senkrecht auf die Oberfläche der Membran 4, also in Fig. 2 etwa in vertikaler Richtung. Die Größe der Dichtungskraft F_{D} kann durch die Einrichtung 17 zur Veränderung der Dichtungskraft verändert werden. Dies kann beispielsweise dadurch erfolgen, dass die Einrichtung 17 zur Veränderung der Dichtungskraft einen Aktuator aufweist, der die Dichtung 16 mit größerer oder kleinerer Kraft auf die Membran 4 presst. Eine größere Dichtungskraft F_{D} führt zu einer zuverlässigeren Abdichtung, schränkt jedoch die Beweglichkeit der Membran 4 ein. Umgekehrt verbessert eine geringere Dichtungskraft F_{D} die Beweglichkeit der Membran 4, führt jedoch zu einer verschlechterten Abdichtung und der damit verbundenen Gefahr von Leckagen. Die Größe der Dichtungskraft F_{D} kann daher in Abhängigkeit von den Verfahrensparametern (insb. Druck und/oder Temperatur in der Kavität 5) durch die Einrichtung 17 zur Veränderung der Dichtungskraft auf einen optimalen Wert eingestellt werden.

Die in Fig. 2 dargestellte Dichtungskraft F_{D} führt zu eine Reibungskraft F_{R} zwischen der Membran und der Dichtung. Die Reibungskraft F_{R} wirkt entlang der Membranfläche und somit parallel zur Oberfläche der Membran 4, also in Fig. 2 etwa in horizontaler Richtung. Die Reibungskraft F_{R} ist stets der Bewegung der Membran 4 entgegengerichtet; da sich die Membran 4, insbesondere thermisch bedingt, ausdehnen und zusammenziehen kann, kann die Reibungskraft F_{R} also unterschiedliche Richtungen aufweisen (in Fig. 2 durch einen Doppelpfeil dargestellt). Beispielsweise wirkt bei einer Ausdehnung der Membran 4 im Arbeitsraum 8 die Reibungskraft F_{R} einer Bewegung der Membran 4 aus dem Arbeitsraum 8 hinaus entgegen. Bei einem Zusammenziehen der Membran 4 im Arbeitsraum 8 wirkt die Reibungskraft F_{R} einer Bewegung der Membran 4 in den Arbeitsraum 8 hinein entgegen. Die Größe der Reibungskraft F_{R} hängt von der Größe der sie verursachenden Dichtungskraft F_{D} ab, oftmals gibt es innerhalb bestimmter Grenzen einen etwa linearen Zusammenhang (das Verhältnis zwischen Reibungskraft und Anpresskraft wird auch als "Reibungskoeffizient" bezeichnet).

Zudem ist in Fig. 2 eine Vorspannkraft F_{V} dargestellt, mit der die Membran 4 vorgespannt wird. Die Vorspannkraft Fv wirkt entlang der Membranfläche und somit parallel zur Oberfläche der Membran 4, also in Fig. 2 etwa in horizontaler Richtung. Auch die Größe der Vorspannkraft F_{V} ist einstellbar bzw. veränderbar, und zwar durch die Einrichtung zur Veränderung der Vorspannung 18. Die Einstellung bzw. Veränderung der Vorspannkraft F_{V} kann beispielsweise durch eine Veränderung der Vorspannung der Feder 15 erreicht werden.

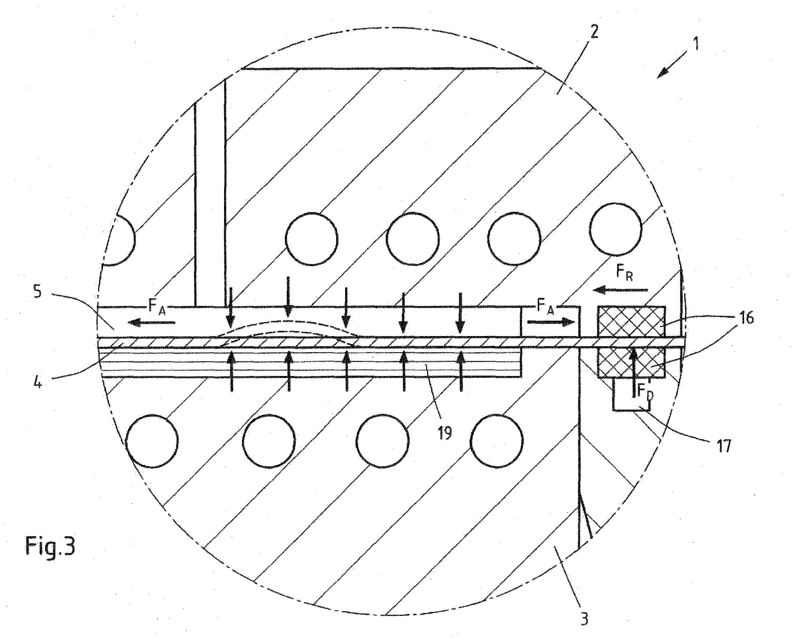

Fig. 3 zeigt einen Ausschnitt der Vorrichtung 1 aus Fig. 1C in vergrößerter Ansicht. Die beiden Presswerkzeuge 2, 3 befinden sich in der geschlossenen Stellung. Die Membran 4 wird mit Druck und/oder Temperatur beaufschlagt, damit das Werkstück 19 mittels der Membran ebenfalls mit Druck und/oder Temperatur beaufschlagt werden kann. Um eine gleichmäßige Beaufschlagung des Werkstücks 19 mit Druck und/oder Temperatur zu erreichen, sollte die Membran 4 im Wesentlichen durchgängig an dem Werkstück 4 anliegen. Aufgrund der Beaufschlagung der Membran 4 mit Druck und/oder Temperatur kann es jedoch zu einer - insbesondere thermisch bedingten - Ausdehnung der Membran 4 kommen. Auch die beiden Presswerkzeug 2, 3 können sich durch die Beaufschlagung mit Druck und/oder Temperatur, insbesondere thermisch, ausdehnen. Die Ausdehnung der Membran 4 ist üblicherweise stärker als die Ausdehnung der Presswerkzeuge 2, 3. Dies ist dadurch bedingt, dass die Membran 4 üblicherweise aus einem Material hergestellt ist, das einen niedrigeren Wärmeausdehnungskoeffizienten aufweist als das oder die Materialien aus denen die Presswerkzeuge 2, 3 hergestellt sind. Die Presswerkzeuge 2, 3 sind beispielsweise aus Invar hergestellt. Durch die Ausdehnung der Membran 4 vergrößert sich die Membranfläche der Membran 4 und/oder längt sich die Membran 4, wodurch die Gefahr besteht, dass sich die ausdehnende Membran 4 in die Kavität 5 hinein ausdehnt, insbesondere in die Kavität 5 hinein aufwölbt. Eine Ausdehnung der Membran 4 in die Kavität 5 ist in Fig. 3 mittels gestrichelter Linien beispielhaft dargestellt. Eine Ausdehnung der Membran 4 in die Kavität 5 hätte zur Folge, dass die Membran 4 sich von dem Werkstück 19 löst, somit nicht mehr im Wesentlichen durchgängig an dem Werkstück 19 anliegt und das Werkstück 19 nicht gleichmäßig mittels der Membran 4 mit Druck und/oder Temperatur beaufschlagt werden kann. Um einem Ausdehnen der Membran 4 in die Kavität 5 hinein entgegenzuwirken wird die Membran 4 daher mit Druck, insbesondere mittels des Arbeitsmediums in der Kavität 5, beaufschlagt. Bei dieser Beaufschlagung mit Druck kann es sich insbesondere um die bereits zuvor erläuterte Beaufschlagung der Membran 4 mit Druck und/oder Temperatur, insbesondere mittels des Arbeitsmediums in der Kavität 5, handeln. Der Druck mit dem die Membran 4 beaufschlagt wird, muss dabei wenigstens gleich groß, vorzugsweise größer sein, als der Druck mit dem sich die Membran 4 in Richtung der Kavität 5 ausdehnt.

Durch die Beaufschlagung der Membran 4 mit Druck wird entlang der Membranfläche der Membran 4 eine Ausdehnungskraft F_{A} bewirkt. Die Ausdehnungskraft F_{A} wird dabei vorzugsweise dadurch bewirkt, dass der Druck, mit dem die Membran 4 beaufschlagt wird, wenigstens teilweise entlang der Membranfläche der Membran 4 abgeleitet wird. Durch die Beaufschlagung der Membran 4 mit Druck wird die Membran 4 zudem wenigstens abschnittsweise gegen das zu bearbeitende bzw. herzustellende Werkstück 19 gedrückt. Dadurch wird die Membran zwischen dem Werkstück 19 und dem Druck, mit dem die Membran 4 beaufschlagt wird, wenigstens abschnittsweise "eingespannt" (dargestellt in Fig. 3 durch Pfeile). Die Membran 4 kann sich aufgrund dieser Einspannung lediglich im Wesentlichen entlang der Membranfläche der Membran 4 ausdehnen, was ebenfalls zum Bewirken der Ausdehnungskraft F_{A} entlang der Membranfläche der Membran 4 beiträgt.

Damit sich die ausdehnende bzw. ausgedehnte Membran 4 nicht vom Werkstück 19 löst, sondern im Wesentlichen durchgängig an dem Werkstück 19 anliegt, muss die Fläche bzw. der Abschnitt um den sich die Membranfläche der Membran 4 vergrößert und/oder die Membran 4 gelängt hat zudem aus dem Arbeitsraum 8 hinausgeführt werden. Andernfalls könnte es zu einer Auffaltung der Membran angrenzend an die Presswerkzeuge 2, 3, insbesondere angrenzend an den Spalt 11, kommen. Um die Membran 4 wenigstens abschnittsweise aus dem Arbeitsraum 8 hinauszuführen, muss die Membran 4 an der Dichtung 16 vorbeigeführt werden. Das Vorbeiführen der Membran 4 an der Dichtung 16 wird dabei durch die Ausdehnungskraft F_{A} bewirkt, welche entlang der Membranfläche der Membran 4 wirkt. Einem Vorbeiführen der Membran 4 an der Dichtung 16 vorbei wirkt jedoch die Reibungskraft F_{R} entgegen, welche aufgrund der Dichtungskraft F_{D} zwischen der Membran 4 und der Dichtung 16 anliegt. Die Ausdehnungskraft F_{A} wirkt daher der Reibungskraft F_{R} wenigstens angrenzend an die Dichtung 16 entgegen. Damit die Membran 4 an der Dichtung 16 vorbeigeführt werden kann, muss vorzugsweise die Summe der Kräfte, die entlang der Membranfläche der Membran 4 wirken, die der Reibungskraft F_{R} zwischen der Membran 4 und der Dichtung 16 entgegenwirken und angrenzend an die Dichtung 16 wirken, größer sein als die Reibungskraft F_{R} zwischen der Membran 4 und der Dichtung 16. Die Summe der Kräfte, die entlang der Membranfläche der Membran 4 wirken, die der Reibungskraft F_{R} zwischen Membran 4 und Dichtung 16 entgegenwirken und angrenzend an die Dichtung 16 wirken, umfasst dabei wenigstens die Ausdehnungskraft F_{A} angrenzend an die Dichtung 16. Vorzugsweise ist die Ausdehnungskraft F_{A} größer als die Reibungskraft F_{R}, dann sind keine zusätzlichen Kräfte nötig um die Membran 4 an der Dichtung 16 vorbeizuführen. Zusätzlich kann jedoch auch die Vorspannkraft F_{V}, welche mittels der Einrichtung zur Veränderung der Vorspannung auf die Membran 4 aufgebracht werden kann, zum Vorbeiführen der Membran 4 an der Dichtung 16 beitragen. Die Summe aus der Ausdehnungskraft F_{A} angrenzend an die Dichtung 16 und der Vorspannkraft Fv, welche in dieselbe Richtung wirkt wie die Ausdehnungskraft F_{A}, muss in diesem Falle größer sein als die Reibungskraft F_{R} zwischen der Membran 4 und der Dichtung 16, welche entgegen der Ausdehnungskraft F_{A} wirkt. Um ein Vorbeiführen der Membran 4 an der Dichtung 16 zu vereinfachen, kann es daher vorgesehen sein, dass während der Beaufschlagung der Membran mit Druck und/oder Temperatur die Dichtungskraft F_{D} durch die Einrichtung 17 zur Veränderung der Dichtungskraft reduziert wird.

Nachdem das Werkstück 19 ausreichend mit Druck und/oder Temperatur beaufschlagt wurde, werden die beiden Presswerkzeuge 2, 3 wieder in die offenen Stellung, wie in den Fig. 1A und 1B gezeigt, bewegt werden. Das Werkstück kann dann aus der Vorrichtung 1 entnommen werden.

Fig. 4A zeigt eine zweite Ausgestaltung einer Vorrichtung 1' zur Durchführung eines erfindungsgemäßen Verfahrens im Querschnitt in offener Stellung ohne eingelegtes Werkstück. Die Vorrichtung 1' unterscheidet sich von der Vorrichtung 1 aus Fig. 1A bis Fig. 3 im Wesentlichen dadurch, dass die Vorrichtung 1' eine zweite Membran 4B' umfasst. Die Funktionsweise der beiden Vorrichtungen 1, 1' ist jedoch grundsätzlich dieselbe. Vorliegend wird daher insbesondere auf die Unterschiede der beiden Vorrichtungen 1, 1' eingegangen.

Die in Fig. 4A gezeigte Vorrichtung 1' umfasst ein erstes - oberes - Presswerkzeug 2' sowie ein zweites - unteres - Presswerkzeug 3'. Die beiden Presswerkzeuge 2', 3' sind relativ zueinander zwischen einer offenen Stellung und einer geschlossenen Stellung bewegbar, beispielsweise in vertikaler Richtung (in Fig. 4A angedeutet durch Pfeile). Zudem umfasst die Vorrichtung 1' eine erste - obere - Membran 4A' und eine zweite - untere - Membran 4B', wobei die erste Membran 4A' mit dem ersten Presswerkzeug 2' verbunden ist und wobei die zweite Membran 4B' mit dem zweiten Presswerkzeug 3' verbunden ist. Zwischen der ersten Membran 4A' und dem mit ihr verbundenen ersten Presswerkzeug 2' bildet sich eine erste Kavität 5A' für ein Arbeitsmedium aus und zwischen der zweiten Membran 4B' und dem mit ihr verbundenen zweiten Presswerkzeug 3' bildet sich eine zweite Kavität 5B' für ein Arbeitsmedium aus, wobei es sich bei dem Arbeitsmedium beispielsweise um Öl handeln kann. Die Membranen 4A', 4B' sind aus Metall hergestellt und weisen vorzugsweise eine Dicke im Bereich zwischen 0,2 mm und 3,5 mm auf. Die Kavitäten 5A', 5B' können über jeweils einen Kanal 6' mit dem Arbeitsmedium befüllt werden. Sowohl in dem ersten Presswerkzeug 2' als auch in dem zweiten Presswerkzeug 3' sind Bohrungen 7' vorgesehen, durch die ein Heiz- und/oder Kühlmedium geleitet werden kann.

Die in Fig. 4A gezeigte Vorrichtung 1 weist zudem einen Arbeitsraum 8' auf, in den ein (in Fig. 4A nicht gezeigtes) Werkstück eingelegt werden kann. Der Arbeitsraum 8' erstreckt sich teilweise in das erste Presswerkzeug 2' und teilweise in das zweite Presswerkzeug 3'. Die beiden Presswerkzeuge 2', 3' weisen eine Führung 9' auf, die beispielsweise durch einen Vorsprung 9A' und eine Ausnehmung 9B' gebildet sein kann, wobei der Vorsprung 9A' an dem zweiten Presswerkzeug 3' vorgesehen sein kann und wobei die Ausnehmung 9B' an dem ersten Presswerkzeug 2' vorgesehen sein kann.

Die erste Membran 4A' ist mit dem ersten Presswerkzeug 2' auf die folgende Weise verbunden (gleiches gilt für die zweite Membran 4B' und das zweite Presswerkzeug 3'): Das erste Presswerkzeug 2' weist in seinem Randbereich einen Spalt 11' auf, durch den die erste Membran 4A' hindurch geführt wird. Der Spalt 11' mündet in einen Hohlraum 12', in dem eine Klemmeinrichtung 13' vorgesehen ist, in die die erste Membran 4A' eingeklemmt ist. Die Klemmeinrichtung 13' ist mit einem Zuganker 14' verbunden, der durch eine Öffnung aus dem ersten Presswerkzeug 2' herausgeführt wird und dort durch eine sich an der Außenfläche abstützende Feder 15' nach außen gedrückt wird, wodurch die erste Membran 4A' mit einer Vorspannung, insbesondere Vorspannkraft F_{V} versehen werden kann. Angrenzend an die Feder 15' ist außerdem eine Einrichtung zur Veränderung der Vorspannung 18' vorgesehen, mit dem die Vorspannung, insbesondere die Vorspannkraft F_{V} verändert werden kann. Zur Abdichtung der ersten Kavität 5A' ist in dem Spalt 11' eine Dichtung 16' vorgesehen, die eine Bewegung der ersten Membran 4A' erlaubt. Angrenzend an die Dichtung 16' ist zudem eine Einrichtung 17' zur Veränderung der Dichtungskraft vorgesehen.

Fig. 4B zeigt die Vorrichtung 1' aus Fig. 4A in offener Stellung mit eingelegtem Werkstück 19'. Diejenigen Bereiche der Vorrichtung 1', die bereits zuvor beschrieben worden sind, sind in Fig. 4B mit entsprechenden Bezugszeichen versehen. Der Unterschied zu der in Fig. 4A gezeigten Stellung liegt darin, dass das Werkstück 19' in den Arbeitsraum 8' des zweite Presswerkzeugs 3' eingelegt worden ist. Neben dem Werkstück 19' sind zwei weitere Werkstücke 19A ' in den Arbeitsraum 8' der Vorrichtung 1 eingelegt, wobei es sich bei den Werkstücken 19A' beispielsweise um bereits vorgefertigte Verstärkungselemente mit Z-förmigem Querschnitt handeln kann (z.B. "Stringer" eines Flugzeugrumpfes). Die Werkstücke 19A' sollen bei dem nachfolgenden Fertigungsschritt mit dem Werkstück 19' verbunden werden. Um trotz der komplexen Geometrie der Werkstücke 19A' eine gleichmäßige Druckverteilung zu ermöglichen, werden mehrere Kerne 20' in den Arbeitsraum eingelegt, deren Form an die Form des Arbeitsraumes 8' sowie an die Form der Werkstücke 19', 19A' angepasst ist.

Fig. 4C zeigt die Vorrichtung 1' aus Fig. 4A in geschlossener Stellung. Diejenigen Bereiche der Vorrichtung 1', die bereits zuvor beschrieben worden sind, sind auch in Fig. 4C mit entsprechenden Bezugszeichen versehen. Die Vorrichtung 1' wurde geschlossen, indem die beiden Presswerkzeuge 2', 3' aufeinander zu in die geschlossene Stellung bewegt worden sind. In der in Fig. 4C gezeigten geschlossenen Stellung wird das Werkstück 19' mit Druck und/oder Temperatur beaufschlagt. Die Beaufschlagung mit Druck und/oder Temperatur erfolgt entsprechend der Vorgehensweise die im Zusammenhang mit der ersten Ausgestaltung einer Vorrichtung 1 zur Durchführung des Verfahrens beschrieben wurde. Bei der vorliegenden zweiten Ausführungsform können die beiden Kavitäten 5A', SB' unabhängig voneinander mit Arbeitsmedium befüllt werden, vorzugsweise werden die beiden Kavitäten 5A', 5B' jedoch gleichmäßig mit Arbeitsmedium befüllt. Ebenso kann das Arbeitsmedium in den beiden Kavitäten 5A', 5B' und/oder die beiden Membranen 4A', 4B' unabhängig voneinander mit Druck und/oder Temperatur beaufschlagt werden. Alternativ oder zusätzlich wird das Arbeitsmedium in den beiden Kavitäten 5A', 5B' und/oder die beiden Membranen 4A', 4B' gleichmäßig mit Druck und/oder Temperatur beaufschlagt.

Fig. 5 zeigt einen ein Ausschnitt der Vorrichtung 1' aus Fig. 4C in vergrößerter Ansicht. Die beiden Presswerkzeuge 2', 3' befinden sich in der geschlossenen Stellung. Die beiden Membran 4A', 4B' werden mit Druck und/oder Temperatur beaufschlagt, damit das Werkstück 19' mittels der Membranen 4A', 4B' ebenfalls mit Druck und/oder Temperatur beaufschlagt werden kann. Die Kavitäten 5A', 5B' werden zudem wenigstens abschnittsweise abgedichtet, indem die Dichtungen 16' auf die jeweilige Membran 4A', 4B' eine Dichtungskraft F_{D} aufbringen, vorzugsweise indem die jeweilige Dichtung 16' mit einer Dichtungskraft F_{D} auf die jeweilige Membran 4A', 4B' drückt. Die Dichtungskraft F_{D} wirkt senkrecht auf die Oberfläche der jeweiligen Membran 4A', 4B', also in Fig. 5 etwa in vertikaler Richtung. Die Größe der Dichtungskraft F_{D} kann durch die jeweilige Einrichtung 17' zur Veränderung der Dichtungskraft verändert werden, wobei jede Einrichtung 17' zur Veränderung der Dichtungskraft die jeweilige Dichtungskraft F_{D} unabhängig verändern kann.

Vorzugsweise verändern die Einrichtungen 17' zur Veränderung der Dichtungskraft jedoch gleichmäßig die jeweilige Dichtungskraft F_{D}. Wie bereits zu der ersten Ausgestaltung der Vorrichtung 1 zur Durchführung des Verfahrens erläutert, führen die jeweiligen Dichtungskräfte F_{D} zu einer jeweiligen Reibungskraft F_{R} zwischen der jeweiligen Membran 4A', 4B' und der jeweiligen Dichtung 16'. Die Reibungskraft F_{R} wirkt dabei entlang der Membranfläche der jeweiligen Membran 4A', 4B' und somit parallel zur Oberfläche der jeweiligen Membran 4A', 4B'.

Auch bei dieser zweiten Ausgestaltung der Vorrichtung 1' stellt sich das Problem, dass es aufgrund der Beaufschlagung der Membranen 4A', 4B' mit Druck und/oder Temperatur zur, insbesondere thermischen, Ausdehnung der Membranen 4A', 4B' kommen kann. Auch die beiden Presswerkzeug 2', 3' können sich ebenfalls durch die Beaufschlagung mit Druck und/oder Temperatur, insbesondere thermisch, ausdehnen, wobei die Ausdehnung der Membranen 4A', 4B' üblicherweise stärker ist als die Ausdehnung der Presswerkzeuge 2', 3'. Wie bereits zu der ersten Ausgestaltung der Vorrichtung 1 erläutert, vergrößern sich die jeweiligen Membranflächen der Membranen 4A', 4B' und/oder längen sich die Membran 4A', 4B', wodurch die Gefahr besteht, dass sich die ausdehnenden Membranen 4A', 4B' in die jeweilige angrenzende Kavität 5A', 5B' ausdehnen. Eine Ausdehnung der Membranen 4A', 4B' in die jeweilige Kavität 5A', 5B' ist in der Fig. 5 mittels gestrichelter Linien beispielhaft dargestellt. Um einem Ausdehnen der Membranen 4A', 4B' in die jeweilige Kavität 5A', 5B' entgegenzuwirken, werden auch bei dieser Ausgestaltung der Vorrichtung 1' die Membranen 4A', 4B mit Druck, insbesondere mittels des Arbeitsmediums in den jeweiligen Kavitäten 5A', 5B', beaufschlagt. Bei dieser Beaufschlagung mit Druck kann es sich insbesondere um die bereits zuvor erläuterte Beaufschlagung der Membranen 4A', 4B' mit Druck und/oder Temperatur, insbesondere mittels des Arbeitsmediums in den jeweiligen Kavitäten 5A', 5B', handeln. Der Druck mit dem die Membranen 4A', 4B' beaufschlagt werden muss dabei jeweils wenigstens gleich groß, vorzugsweise größer sein, als der Druck mit dem sich die jeweilige Membran 4A', 4B' in Richtung der jeweiligen angrenzenden Kavität 5A', 5B' ausdehnt. Die Membranen 4A', 4B' können dabei jeweils unabhängig voneinander oder gleichmäßig mit Druck beaufschlagt werden. Durch die Beaufschlagung der Membranen 4A', 4B' mit Druck wird entlang der Membranfläche der jeweiligen Membran 4A', 4B' eine jeweilige Ausdehnungskraft F_{A} bewirkt.

Wie bereits zu der ersten Ausgestaltung der Vorrichtung 1 erläutert kann aufgrund der Ausdehnungskraft F_{A} die jeweilige Membran 4A', 4B' entgegen der jeweiligen Reibungskraft F_{R} an der Dichtung vorbeigeführt werden. Die Summe der Kräfte, die entlang der Membranfläche der jeweiligen Membran 4A', 4B' wirken, die der jeweiligen Reibungskraft F_{R} zwischen der jeweiligen Membran 4A', 4B' und der jeweiligen Dichtung 16' entgegenwirken und angrenzend an die jeweilige Dichtung 16' wirken, muss vorzugsweise größer sein als die jeweilige Reibungskraft F_{R} zwischen der jeweiligen Membran 4A', 4B' und der jeweiligen Dichtung 16'. Vorliegend kann vorgesehen sein, dass diese Summe der Kräfte je Membran 4A', 4B' unterschiedlich groß sein kann oder gleich groß. Zudem kann die Ausdehnungskraft F_{A} angrenzend an die jeweilige Dichtung je Membran 4A', 4B' unterschiedlich groß sein oder gleich groß. Ebenso kann die Vorspannkraft F_{V}, welche mittels der jeweiligen Einrichtungen zur Veränderung der Vorspannung 18' auf die jeweilige Membran 4A', 4B' aufgebracht werden kann und in dieselbe Richtung wirkt wie die jeweilige Ausdehnungskraft F_{A}, je Membran 4A', 4B' unterschiedlich groß oder gleich groß sein. Die Summe aus der Ausdehnungskraft F_{A} angrenzend an die Dichtung 16 und der Vorspannkraft F_{V}, welche in dieselbe Richtung wirkt wie die Ausdehnungskraft F_{A}, kann ebenfalls je Membran 4A', 4B' unterschiedlich groß sein oder gleich groß. Ebenso kann die Veränderung der Dichtungskraft F_{D} durch die Einrichtungen 17 zur Veränderung der Dichtungskraft je Membran 4A', 4B' unabhängig voneinander oder gleichmäßig erfolgen.

### Bezugszeichenliste:

- 1, 1':: Vorrichtung
- 2, 2':: erstes (oberes) Presswerkzeug
- 3, 3':: zweites (unteres) Presswerkzeug
- 4, 4A', 4B':: Membran
- 5, 5A', 5B':: Kavität
- 6, 6':: Kanal
- 7, 7':: Bohrung
- 8, 8':: Arbeitsraum
- 8A:: Ausnehmung
- 9, 9':: Führung
- 9A, 9A':: Vorsprung
- 9B, 9B':: Ausnehmung
- 10:: Randelement
- 11,11':: Spalt
- 12, 12':: Hohlraum
- 13, 13':: Klemmeinrichtung
- 14, 14':: Zuganker
- 15, 15':: Feder
- 16, 16':: Dichtung
- 17, 17':: Einrichtung zur Veränderung der Dichtungskraft
- 18, 18':: Einrichtung zur Veränderung der Vorspannung
- 19, 19', 19A':: Werkstück
- 20':: Kern

- F_{A}:: Ausdehnungskraft
- F_{D}:: Dichtungskraft
- F_{R}:: Reibungskraft
- Fv:: Vorspannkraft

## Patentansprüche

1. Verfahren zur Herstellung von Formteilen, insbesondere aus FaserverbundWerkstoff, umfassend die folgenden Schritte:
a) Bereitstellen einer Vorrichtung (1, 1') umfassend:
- ein erstes Presswerkzeug (2, 2'),
- ein zweites Presswerkzeug (3, 3'),
- wenigstens eine Membran (4, 4A', 4B'), und
- wenigstens eine Dichtung (16, 16'),
- wobei das erste Presswerkzeug (2, 2') und das zweite Presswerkzeug (3, 3') zwischen einer offenen Stellung und einer geschlossenen Stellung relativ zueinander bewegbar sind,
- wobei sich zwischen dem ersten Presswerkzeug (2, 2') und dem zweiten Presswerkzeug ein Arbeitsraum (8, 8') für ein Werkstück (19, 19', 19A') ausbildet,
- wobei die Membran (4, 4A', 4B') wenigstens abschnittsweise zwischen dem ersten Presswerkzeug (2, 2') und dem zweite Presswerkzeug (3, 3') angeordnet ist,
- wobei die Membran (4, 4A', 4B') wenigstens abschnittsweise in dem Arbeitsraum (8, 8') angeordnet ist,
- wobei sich zwischen der Membran (4, 4A', 4B') und dem ersten Presswerkzeug (2, 2') und/oder dem zweiten Presswerkzeug (3, 3') wenigstens in der geschlossenen Stellung wenigstens eine Kavität (5, 5A', 5B') für ein Arbeitsmedium ausbildet,
- wobei die Kavität (5, 5A', 5B') durch die Dichtung (16, 16') wenigstens in der geschlossenen Stellung wenigstens abschnittsweise abdichtbar ist,
- wobei zur Abdichtung der Kavität (5, 5A', 5B') eine Dichtungskraft (F_{D}) mittels der Dichtung (16, 16') auf die Membran (4, 4A', 4B') aufbringbar ist, und
- wobei die Membran (4, 4A', 4B') und das erste Presswerkzeug (2, 2') und/oder das zweite Presswerkzeug (3, 3') unterschiedliche Wärmeausdehnungskoeffizienten aufweisen,
b) Aufbringen einer Dichtungskraft (F_{D}) mittels der Dichtung (16, 16') auf die Membran (4, 4A', 4B'),
- wobei durch das Aufbringen der Dichtungskraft (F_{D}) auf die Membran (4, 4A', 4B') die Kavität (5, 5A', 5B') wenigstens abschnittsweise abgedichtet wird, und
- wobei durch die Dichtungskraft (F_{D}) eine Reibungskraft (F_{R}) zwischen der Membran (4, 4A', 4B') und der Dichtung (16, 16') anliegt,
c) Beaufschlagen der Membran (4, 4A', 4B') mit Druck und/oder Temperatur, vorzugsweise mittels eines Arbeitsmediums in der Kavität (5, 5A', 5B'),
- wobei sich die Membran (4, 4A', 4B') wenigstens in dem Arbeitsraum (8, 8') wenigstens abschnittsweise ausdehnt, vorzugsweise stärker ausdehnt als das erste Presswerkzeug (2, 2') und/oder das zweite Presswerkzeug (3, 3'),
- wobei die Membran (4, 4A', 4B') mit Druck beaufschlagt wird, vorzugsweise mittels des Arbeitsmediums in der Kavität (5, 5A', SB'),
- wobei der Druck einer Ausdehnung der Membran (4, 4A', 4B') in die Kavität (5, 5A', 5B') entgegenwirkt und dadurch eine Ausdehnungskraft (F_{A}) entlang der Membranfläche bewirkt, und
- wobei die Ausdehnungskraft (F_{A}) wenigstens angrenzend zu der Dichtung (16, 16') der Reibungskraft (F_{R}) zwischen der Membran (4, 4A', 48') und der Dichtung (16, 16') entgegenwirkt,
**dadurch gekennzeichnet, dass**
die Membran (4, 4A', 4B') an der Dichtung (16, 16') vorbeiführbar ist und dass in Schritt c) die Membran (4, 4A', 4B') aufgrund der Ausdehnungskraft (F_{A}) wenigstens abschnittsweise an der Dichtung (16, 16') vorbeigeführt wird.

2. Verfahren zur Herstellung von Formteilen nach Anspruch 1,
**dadurch gekennzeichnet, dass**
der Schritt b) und der Schritt c) sich wenigstens zeitlich überschneiden.

3. Verfahren zur Herstellung von Formteilen nach Anspruch 1 oder Anspruch 2,
**dadurch gekennzeichnet, dass**
die Ausdehnungskraft (F_{A}) größer ist als die Reibungskraft (F_{R}) zwischen der Membran (4, 4A', 4B') und der Dichtung (16, 16').

4. Verfahren zur Herstellung von Formteilen nach einem der Ansprüche 1 bis 3, umfassend die folgenden Schritte, die nach Schritt a) und vorzugsweise vor Schritt b) und/oder vor Schritt c) erfolgen:
a1) Bereitstellen von wenigstens einem Werkstück (19, 19', 19A'),
a2) Einlegen des Werkstücks(19, 19', 19A') in die Vorrichtung (1, 1'), insbesondere in den Arbeitsraum (8, 8'), und
a3) Bewegen des ersten Presswerkzeugs (2, 2') und/oder des zweiten Presswerkzeugs (3, 3') in die geschlossene Stellung.

5. Verfahren zur Herstellung von Formteilen nach einem der Ansprüche 1 bis 4,
**dadurch gekennzeichnet, dass**
die in Schritt a) bereitgestellte Vorrichtung (1, 1') wenigstens eine Einrichtung zur Veränderung der Vorspannung (18, 18') der Membran (4, 4A', 4B') umfasst.

6. Verfahren zur Herstellung von Formteilen nach Anspruch 5,
umfassend den folgenden Schritt, der nach Schritt a) und, vorzugsweise, vor Schritt b) und/oder vor Schritt c) erfolgt:
a4) Vorspannen der Membran (4, 4A', 4B') mittels der Einrichtung zur Veränderung der Vorspannung (18, 18').

7. Verfahren zur Herstellung von Formteilen nach Anspruch 6,
**dadurch gekennzeichnet, dass**
durch das Vorspannen der Membran (4, 4A', 4B') gemäß Schritt a4) eine Vorspannkraft (F_{V}) an der Membran (4, 4A', 4B') anliegt und, vorzugsweise, dass die Vorspannkraft (F_{V}), insbesondere während des Schritts b) und/oder während des Schritts c), geringer ist als die Reibungskraft (F_{R}) zwischen der Membran (4, 4A', 4B') und der Dichtung (16, 16').

8. Verfahren zur Herstellung von Formteilen nach Anspruch 7,
**dadurch gekennzeichnet, dass**
während dem Schritt b) und/oder während dem Schritt c) die an der Membran (4, 4A', 4B') anliegende Vorspannkraft (Fv) durch die Einrichtung zur Veränderung der Vorspannung (18, 18') verändert, insbesondere reduziert, wird.

9. Verfahren zur Herstellung von Formteilen nach Anspruch 7 oder Anspruch 8,
**dadurch gekennzeichnet, dass**
die Summe aus Ausdehnungskraft (F_{A}) und Vorspannkraft (F_{V}), insbesondere während des Schritt b) und/oder während des Schritt c), größer ist als die Reibungskraft (F_{R}) zwischen der Membran (4, 4A', 4B') und der Dichtung (16, 16').

10. Verfahren zur Herstellung von Formteilen nach einem der Ansprüche 1 bis 9,
**dadurch gekennzeichnet, dass**
während Schritt b) und/oder während Schritt c) der Druck und/oder die Temperatur des Arbeitsmediums in der Kavität (5, 5A', 5B') verändert werden.

11. Verfahren zur Herstellung von Formteilen nach einem der Ansprüche 1 bis 10,
**dadurch gekennzeichnet, dass**
die in Schritt a) bereitgestellte Vorrichtung (1, 1') wenigstens eine Einrichtung (17, 17') zur Veränderung der Dichtungskraft umfasst, vorzugsweise angrenzend an die Dichtung (16, 16').

12. Verfahren zur Herstellung von Formteilen nach einem der Ansprüche 1 bis 11,
**dadurch gekennzeichnet, dass**
die in Schritt a) bereitgestellte Vorrichtung (1') wenigstens eine zweite Membran (4B') umfasst,
- wobei sich zwischen der wenigstens zweiten Membran (4B') und dem ersten Presswerkzeug (2') und/oder dem zweiten Presswerkzeug (3') wenigstens in der geschlossenen Stellung wenigstens eine zweite Kavität (5B') für ein Arbeitsmedium ausbildet,
- wobei zur Abdichtung der zweiten Kavität (5B') eine Dichtungskraft (F_{D}) mittels wenigstens einer zweiten Dichtung (16') auf die zweite Membran (4B') aufbringbar ist, und
- wobei die zweite Membran (4B') an der zweiten Dichtung (16') vorbeiführbar ist.

13. Verfahren zur Herstellung von Formteilen nach einem der Ansprüche 1 bis 12,
**dadurch gekennzeichnet, dass**
in Schritt b) und/oder in Schritt c) der Druck des in der Kavität (5, 5A', 5B') befindlichen Arbeitsmediums wenigstens auf 1,2 bar, insbesondere auf 2 bar, angehoben wird und vorzugsweise, dass in Schritt b) und/oder in Schritt c) der Druck des in der Kavität (5, 5A', 5B') befindlichen Arbeitsmediums bis auf einen Maximaldruck im Bereich zwischen 10 bar und 50 bar, insbesondere zwischen 15 bar und 30 bar angehoben wird.

14. Verfahren zur Herstellung von Formteilen nach einem der Ansprüche 1 bis 13,
**dadurch gekennzeichnet, dass**
in Schritt b) und/oder in Schritt c) die Temperatur des in der Kavität (5, 5A', 5B') befindlichen Arbeitsmediums auf eine Maximaltemperatur im Bereich zwischen 280°C und 500°C, insbesondere zwischen 310°C und 410°C angehoben wird.

15. Verfahren zur Herstellung von Formteilen nach einem der Ansprüche 1 bis 14, umfassend den folgenden Schritt, der nach Schritt b) und/oder nach Schritt c) erfolgt:
c) Öffnen der Vorrichtung (1, 1') und entnehmen des Werkstücks (19, 19', 19A').

## Claims

1. Method for manufacturing moulded parts, in particular from fibre composite material, comprising the following steps:
a) providing a device (1, 1') comprising:
- a first pressing tool (2, 2'),
- a second pressing tool (3, 3'),
- at least one membrane (4, 4A', 4B'), and
- at least one seal (16, 16'),
- wherein the first pressing tool (2, 2') and the second pressing tool (3, 3') can be moved relative to one another between an open position and a closed position,
- wherein a working space (8, 8') for a workpiece (19, 19', 19A') is formed between the first pressing tool (2, 2') and the second pressing tool,
- wherein the membrane (4, 4A', 4B') is arranged at least in sections between the first pressing tool (2, 2') and the second pressing tool (3, 3'),
- wherein the membrane (4, 4A', 4B') is arranged at least in sections in the working space (8, 8'),
- wherein at least one cavity (5, 5A', 5B') for a working medium is formed between the membrane (4, 4A', 4B') and the first pressing tool (2, 2') and/or the second pressing tool (3, 3') at least in the closed position,
- wherein the cavity (5, 5A', 5B') can be sealed by the seal (16, 16') at least in sections at least in the closed position,
- wherein, in order to seal the cavity (5, 5A', 5B'), a sealing force (F_{D}) can be applied to the membrane (4, 4A', 4B') by means of the seal (16, 16'), and
- wherein the membrane (4, 4A', 4B') and the first pressing tool (2, 2') and/or the second pressing tool (3, 3') have different thermal expansion coefficients,
b) applying a sealing force (F_{D}) by means of the seal (16, 16') to the membrane (4, 4A', 4B'),
- wherein the cavity (5, 5A', 5B') is sealed at least in sections by applying the sealing force (F_{D}) to the membrane (4, 4A', 4B'), and
- wherein a frictional force; (F_{R}) is applied between the membrane (4, 4A', 4B') and the seal (16, 16') by the sealing force (F_{D}),
c) applying pressure and/or temperature to the membrane (4, 4A', 4B'), preferably by means of a working medium in the cavity (5, 5A', 5B'),
- wherein the membrane (4, 4A', 4B') extends at least in sections at least in the working space (8, 8'), preferably more strongly than the first pressing tool (2, 2') and/or the second pressing tool (3, 3'),
- wherein pressure is applied to the membrane (4, 4A', 4B'), preferably by means of the working medium in the cavity (5, 5A', 5B'),
- wherein the pressure counteracts an expansion of the membrane (4, 4A', 4B') into the cavity (5, 5A', 5B') and thereby effects an expansion force (F_{A}) along the membrane surface, and
- wherein the expansion force (F_{A}) counteracts the frictional force (F_{R}) between the membrane (4, 4A', 4B') and the seal (16, 16') at least adjoining the seal (16, 16'),
**characterised in that**
the membrane (4, 4A', 4B') can be passed by the seal (16, 16') and **in that** in step c), the membrane (4, 4A', 4B') is passed by the seal (16, 16') at least in sections due to the expansion force (F_{A}).

2. Method for manufacturing moulded parts according to claim 1,
**characterised in that** step b) and step c) overlap at least in time.

3. Method for manufacturing moulded parts according to claim 1 or claim 2,
**characterised in that** the expansion force (F_{A}) is greater than the frictional force (F_{R}) between the membrane (4, 4A', 4B') and the seal (16, 16').

4. Method for manufacturing moulded parts according to any one of claims 1 to 3, comprising the following steps, which take place after step a) and preferably before step b) and/or before step c):
a1) providing at least one workpiece (19, 19', 19A'),
a2) inserting the workpiece (19, 19', 19A') into the device (1, 1'), in particular into the working space (8, 8'), and
a3) moving the first pressing tool (2, 2') and/or the second pressing tool (3, 3') into the closed position.

5. Method for manufacturing moulded parts according to any one of claims 1 to 4, **characterised in that** the device (1, 1') provided in step a) comprises at least one device for changing the pretension (18, 18') of the membrane (4, 4A', 4B').

6. Method for manufacturing moulded parts according to claim 5, comprising the following step, which takes place after step a) and, preferably, before step b) and/or before step c):
a4) pretensioning the membrane (4, 4A', 4B') by means of the device for changing the pretension (18, 18').

7. Method for manufacturing moulded parts according to claim 6,
**characterised in that** a pretension force (Fv) is applied to the membrane (4, 4A', 4B') through the pretensioning of the membrane (4, 4A', 4B') according to step a4) and, preferably **in that** the pretension force (Fv), in particular during step b) and/or during step c), is smaller than the frictional force (F_{R}) between the membrane (4, 4A', 4B') and the seal (16, 16').

8. Method for manufacturing moulded parts according to claim 7,
**characterised in that** during step b) and/or during step c), the pretension force (Fv) applied to the membrane (4, 4A', 4B') is changed, in particular reduced, by the device for changing the pretension (18, 18').

9. Method for manufacturing moulded parts according to claim 7 or claim 8,
**characterised in that** the sum of expansion force (F_{A}) and pretension force (Fv), in particular during step b) and/or during step c), is greater than the frictional force (F_{R}) between the membrane (4, 4A', 4B') and the seal (16, 16').

10. Method for manufacturing moulded parts according to any one of claims 1 to 9, **characterised in that** during step b) and/or during step c), the pressure and/or the temperature of the working medium in the cavity (5, 5A', 5B') are changed.

11. Method for manufacturing moulded parts according to any one of claims 1 to 10, **characterised in that** the device (1, 1') provided in step a) comprises at least one device (17, 17') for changing the sealing force, preferably adjoining the seal (16, 16').

12. Method for manufacturing moulded parts according to any one of claims 1 to 11, **characterised in that** the device (1') provided in step a) comprises at least one second membrane (4B'),
- wherein at least one second cavity (5B') for a working medium is formed between the at least second membrane (4B') and the first pressing tool (2') and/or the second pressing tool (3') at least in the closed position,
- wherein, in order to seal the second cavity (5B'), a sealing force (F_{D}) can be applied to the second membrane (4B') by means of at least one second seal (16'), and
- wherein the second membrane (4B') can be passed by the second seal (16').

13. Method for manufacturing moulded parts according to any one of claims 1 to 12, **characterised in that** in step b) and/or in step c), the pressure of the working medium located in the cavity (5, 5A', 5B') is raised at least to 1.2 bar, in particular to 2 bar, and preferably **in that** in step b) and/or in step c), the pressure of the working medium located in the cavity (5, 5A', 5B') is raised up to a maximum pressure in the range of between 10 bar and 50 bar, in particular of between 15 bar and 30 bar.

14. Method for manufacturing moulded parts according to any one of claims 1 to 13, **characterised in that** in step b) and/or in step c), the temperature of the working medium located in the cavity (5, 5A', 5B') is raised to a maximum temperature in the range of between 280°C and 500°C, in particular of between 310°C and 410°C.

15. Method for manufacturing moulded parts according to any one of claims 1 to 14, comprising the following step, which takes place after step b) and/or after step c):
c) opening the device (1, 1') and removing the workpiece (19, 19', 19A').

## Revendications

1. Procédé de fabrication de pièces moulées, notamment de pièces constituées d'un matériau composite fibreux, comprenant les étapes suivantes :
a) La mise à disposition d'un dispositif (1, 1') comportant :
- un premier outil de pressage (2, 2'),
- un deuxième outil de pressage (3, 3'), et
- au moins une membrane (4, 4A', 4B'), et
- au moins un joint d'étanchéité (16, 16'),
- le premier outil de pressage (2, 2') et le deuxième outil de pressage (3, 3') étant mobiles l'un par rapport à l'autre entre une position ouverte et une position fermée,
- un espace de travail (8, 8') pour une pièce à travailler (19, 19', 19A') étant formé entre le premier outil de pressage (2, 2') et le deuxième outil de pressage,
- la membrane (4, 4A', 4B') étant agencée, au moins partiellement, entre le premier outil de pressage (2, 2') et le deuxième outil de pressage (3, 3'),
- la membrane (4, 4A', 4B') étant agencée, au moins partiellement, dans l'espace de travail (8, 8'),
- au moins une cavité (5, 5A', 5B') pour un fluide de travail étant formé entre la membrane (4, 4A', 4B') et le premier outil de pressage (2, 2') et/ou le deuxième outil de pressage (3, 3'), au moins en position fermée,
- la cavité (5, 5A', 5B') étant rendue étanche, au moins partiellement, par l'intermédiaire du joint d'étanchéité (16, 16'), au moins en position fermée,
- une force d'étanchéité (F_{D}) pouvant être appliquée sur la membrane (4, 4A', 4B') au moyen du joint d'étanchéité (16, 16') pour assurer l'étanchéité de la cavité (5, 5A', 5B'), et
- la membrane (4, 4A', 4B') et le premier outil de pressage (2, 2') et/ou le deuxième outil de pressage (3, 3') présentant des coefficients d'expansion thermique différents,
b) application d'une force d'étanchéité (F_{D}) au moyen du joint d'étanchéité (16, 16') sur la membrane (4, 4A', 4B'),
- l'application de la force d'étanchéité (F_{D}) sur la membrane (4, 4A', 4B') permet d'étanchéifier la cavité (5, 5A', 5B'), au moins partiellement, et
- une force de friction (F_{R} ) étant appliquée, par l'intermédiaire de la force d'étanchéité (FD), entre la membrane (4, 4A', 4B') et le joint d'étanchéité (16, 16'),
c) la membrane (4, 4A', 4B') étant soumise à une pression et/ou à une température, de préférence au moyen d'un fluide de travail, dans la cavité (5, 5A', 5B'),
- la membrane (4, 4A', 4B') se dilatant au moins dans l'espace de travail (8, 8'), au moins partiellement, de préférence majoritairement par rapport u premier outil de pressage (2, 2') et/ou au deuxième outil de pressage (3, 3'),
- la membrane (4, 4A', 4B') étant soumise à une pression, de préférence au moyen du fluide de travail, dans la cavité (5, 5A', 5B'),
- la pression s'opposant à une expansion de la membrane (4, 4A', 4B') dans la cavité (5, 5A', 5B') et provoquant ainsi une force d'expansion (F_{A} ) le long de la surface de la membrane, et
- la force d'expansion (F_{A}), au moins adjacente au joint d'étanchéité (16, 16'), s'opposant à la force de frottement (F_{R}) entre la membrane (4, 4A', 4B') et le joint d'étanchéité (16, 16'),
**caractérisée en ce que**
la membrane (4, 4A', 4B') peut être glissée au-delà du joint d'étanchéité (16, 16') et **en ce que**, à l'étape c), la membrane (4, 4A', 4B') peut être glissée au-delà du joint d'étanchéité (16, 16'), au moins partiellement, en raison de la force d'expansion (F_{A}).

2. Procédé de fabrication de pièces moulées selon la revendication 1, **caractérisé en ce que** l'étape b) et l'étape c) se chevauchent au moins dans le temps.

3. Procédé de fabrication de pièces moulées selon la revendication 1 ou la revendication 2, **caractérisé en ce que** la force d'expansion (F_{A}) est supérieure à la force de friction (F_{R}) entre la membrane (4, 4A', 4B') et le joint d'étanchéité (16, 16').

4. Procédé de fabrication de pièces moulées selon l'une quelconque des revendications 1 à 3, comprenant les étapes suivantes, lesquelles sont effectuées après l'étape a) et, de préférence, avant l'étape b) et/ou avant l'étape c) :
a1) mise à disposition d'au moins une pièce à travailler (19, 19', 19A'),
a2) l'insertion de la pièce à travailler (19, 19', 19A') dans le dispositif (1, 1'), notamment dans l'espace de travail (8, 8'), et
a3) le déplacement du premier outil de pressage (2, 2') et/ou du deuxième outil de pressage (3, 3') en position fermée.

5. Procédé de fabrication de pièces moulées selon l'une quelconque des revendications 1 à 4, **caractérisé en ce que** le dispositif (1, 1') mis à disposition à l'étape a) comprend au moins un dispositif de modification de précontrainte (18, 18') de la membrane (4, 4A', 4B').

6. Procédé de fabrication de pièces moulées selon la revendication 5, comprenant l'étape suivante qui a lieu après l'étape a) et, de préférence, avant l'étape b) et/ou avant l'étape c) :
a4) précontrainte de la membrane (4, 4A', 4B') au moyen du dispositif de modification de précontrainte (18, 18').

7. Procédé de fabrication de pièces moulées selon la revendication 6, **caractérisé en ce que**, du fait de la précontrainte de la membrane (4, 4A', 4B') selon l'étape a4), une force de précontrainte (Fv) est appliquée sur la membrane (4, 4A', 4B') et, de préférence, **en ce que** la force de précontrainte (Fv), notamment pendant l'étape b) et/ou pendant l'étape c), est inférieure à la force de friction (F_{R}) entre la membrane (4, 4A', 4B') et le joint d'étanchéité (16, 16').

8. Procédé de fabrication de pièces moulées selon la revendication 7, **caractérisé en ce que**, pendant l'étape b) et/ou pendant l'étape c), la force de précontrainte (Fv) appliquée sur la membrane (4, 4A', 4B') est modifiée, notamment réduite, par le dispositif de modification de précontrainte (18, 18').

9. Procédé de fabrication de pièces moulées selon la revendication 7 ou la revendication 8, **caractérisé en ce que** la somme de la force d'expansion (F_{A}) et de la force de précontrainte (Fv), notamment pendant l'étape b) et/ou l'étape c), est supérieure à la force de friction (F_{R}) entre la membrane (4, 4A', 4B') et le joint d'étanchéité (16, 16').

10. Procédé de fabrication de pièces moulées selon l'une quelconque des revendications 1 à 9, **caractérisé en ce que** l'on modifie la pression et/ou la température du fluide de travail dans la cavité (5, 5A', 5B') pendant l'étape b) et/ou l'étape c).

11. Procédé de fabrication de pièces moulées selon l'une quelconque des revendications 1 à 10, **caractérisé en ce que** le dispositif (1, 1') mis à disposition à l'étape a) comporte au moins un dispositif (17, 17') de modification de la force d'étanchéité, de préférence adjacent au joint d'étanchéité (16, 16').

12. Procédé de fabrication de pièces moulées selon l'une quelconque des revendications 1 à 11, **caractérisé en ce que** le dispositif (1') mis à disposition à l'étape a) comporte au moins une deuxième membrane (4B'),
- au moins une deuxième cavité (5B') pour un fluide de travail se forme entre au moins ladite deuxième membrane (4B') et le premier outil de pressage (2') et/ou le deuxième outil de pressage (3'), au moins en position fermée,
- une force d'étanchéité (F_{D}) pouvant être appliquée sur la deuxième membrane (4B') au moyen d'au moins un deuxième joint d'étanchéité (16') pour assurer l'étanchéité de la deuxième cavité (5B'), et
- la deuxième membrane (4B') pouvant être glissée au-delà du deuxième joint d'étanchéité (16').

13. Procédé de fabrication de pièces moulées selon l'une quelconque des revendications 1 à 12, **caractérisé en ce que**, à l'étape b) et/ou à l'étape c), la pression du fluide de travail se trouvant dans la cavité (5, 5A', 5B') est augmentée à au moins 1,2 bar, notamment à 2 bar, et de préférence **en ce que**, à l'étape b) et/ou à l'étape c), la pression du fluide de travail se trouvant dans la cavité (5, 5A', 5B') est augmentée jusqu'à une pression maximale comprise entre 10 bar et 50 bar, notamment entre 15 bar et 30 bar.

14. Procédé de fabrication de pièces moulées selon l'une quelconque des revendications 1 à 13, **caractérisé en ce que**, à l'étape b) et/ou à l'étape c), la température du fluide de travail se trouvant dans la cavité (5, 5A', 5B') est augmentée à une température maximale comprise entre 280 °C et 500 °C, notamment entre 310 °C et 410 °C.

15. Procédé de fabrication de pièces moulées selon l'une quelconque des revendications 1 à 14, comportant l'étape suivante qui a lieu après l'étape b) et/ou après l'étape c) :
c) ouverture du dispositif (1, 1') et retrait de la pièce à travailler (19, 19', 19A').
